(19) Europäisches Patentamt
European Patent Office
Office européen des brevets

(11) **EP 2 269 295 B1**

(12) **EUROPÄISCHE PATENTSCHRIFT**

(45) Veröffentlichungstag und Bekanntmachung des Hinweises auf die Patenterteilung:
**11.03.2015   Patentblatt 2015/11**

(21) Anmeldenummer: **09733614.3**

(22) Anmeldetag: **21.03.2009**

(51) Int Cl.:
***H02M 7/48*** *(2007.01)*

(86) Internationale Anmeldenummer:
**PCT/EP2009/002102**

(87) Internationale Veröffentlichungsnummer:
**WO 2009/127313 (22.10.2009 Gazette 2009/43)**

(54) **VERFAHREN ZUR BESTIMMUNG EINES STROMRAUMZEIGERS, UMRICHTER, LEITERPLATTE UND BAUREIHE VON UMRICHTERN**

METHOD FOR DETERMINING A CURRENT SPACE INDICATOR, RECTIFIER, CIRCUIT BOARD, AND SERIES OF RECTIFIERS

PROCEDE DE DÉTERMINATION D'UN VECTEUR POLAIRE DE COURANT, REDRESSEUR, CARTE DE CIRCUITS ET SERIE DE REDRESSEURS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **14.04.2008   DE 102008018885**

(43) Veröffentlichungstag der Anmeldung:
**05.01.2011   Patentblatt 2011/01**

(73) Patentinhaber: **SEW-EURODRIVE GmbH & Co. KG 76646 Bruchsal (DE)**

(72) Erfinder:
• **WOLF, Harald**
  **76698 Ubstadt-Weiher (DE)**
• **HEIL, Manuel**
  **76287 Rheinstetten (DE)**
• **BENNERSCHEIDT, Ralf**
  **76131 Karlsruhe (DE)**

(56) Entgegenhaltungen:
WO-A-03/041258    DE-A1- 10 354 130
GB-A- 2 437 696    US-B1- 6 301 137

EP 2 269 295 B1

**Beschreibung**

Die Erfindung betrifft ein Verfahren zur Bestimmung eines Stromraumzeigers und einen Umrichter.

Bei einem ausgangsspannungsseitig pulsweitenmoduliert betriebenen Umrichter mit digitaler Regelung ist es zur Erreichung einer ausreichenden Regelgüte erforderlich, für eine Pulsweitenmodulationsperiode einen Wert für denjenigen Stromraumzeiger zu bestimmen, welcher dem über diese Pulsweitenmodulationsperiode gebildeten Mittelwert des real vorhandenen Stromraumzeigers entspricht. Die pulsweitenmodulierte Ausgangsspannung hat bei induktiver Last, wie insbesondere bei einem Elektromotor, einen sogenannten Stromripple zur Folge. Die Bestimmung des Stromraumzeigers muss unbeeinflusst von diesem Stromripple erfolgen. Bei manchen Umrichtern des Standes der Technik sind die Stromsensoren in den Zuleitungen zum Motor angeordnet, wodurch kontinuierliche Stromsignale auftreten, die durch analoge Filterung vom Stromripple befreit werden und dann für die Regelung verwendbar sind.

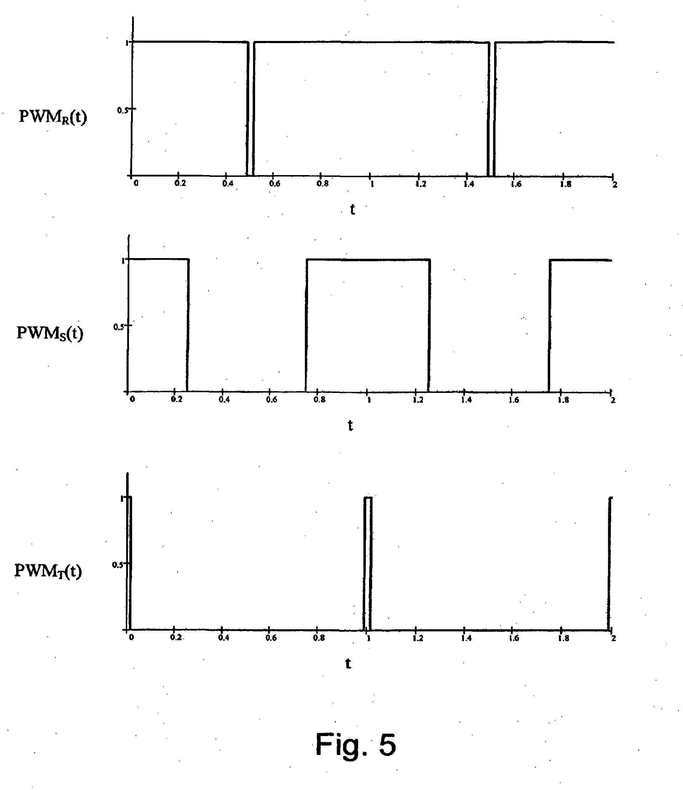

Aus dem Buch ‚Praxis der feldorientierten Drehstromantriebsregelungen' von Nguyen Phung Quang und Jörg-Andreas Dittrich, zweite Auflage, aus dem Jahre 1999 sind aus Seite 110-113 pulsweitenmoduliert betreibbare Umrichter bekannt, bei denen Stromerfassungen mit Hilfe von drei (Abb. 5.1) oder auch nur zwei (Abb.5.3, 5.5, 5.6, 5.9, 5.11) potentialtrennenden Stromfühlern in den Ausgangszweigen vorgesehen sind. Aus den Strommesswerten wird dabei ein Stromraumzeiger mit zwei Freiheitsgraden bestimmt (Abb. 5.3, 5.5, 5.6, 5.9, 5.11). Weiter ist auf der Seite 76 bis 77 ausgeführt, dass zur Erfassung der Grundschwingung der Motorströme ohne Oberschwingungen, also ohne Stromripple, zu geeigneten Zeitpunkten die Strommesswerte zu erfassen sind. Dabei bezeichnet man die Abweichung von der Grundschwingung als Differenzstromraumzeiger. Die Erfassung der Strommesswerte erfolgt dann im Nulldurchgang des Differenzstromraumzeigers. Von Nachteil ist bei diesen bekannten Umrichtern, dass mindestens zwei kostspielige, potentialtrennende Strommessmittel notwendig sind.

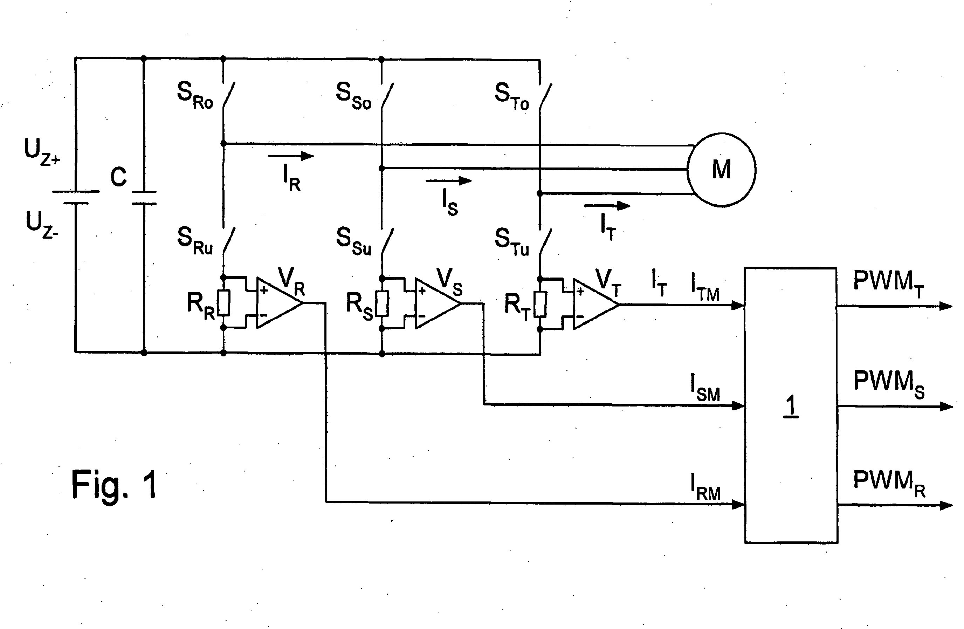

Aus der DE 196 81 189 T1 ist ein pulsweitenmoduliert betreibbarer Umrichter mit Zwischenkreiskondensator (Figur 1, Bezugszeichen 3) und eine mit diesem verbundene Endstufe bekannt, die nur einen Stromfühler zur Erfassung des Zwischenkreisstromes umfasst. Die Stromerfassung enthält somit je nach Winkel des Ausgangsspannungszeigers die Information über einen einzelnen Phasenstrom oder Summen von Phasenströmen. Nachteilig ist dabei, dass bei bestimmten Winkeln des Ausgangsspannungszeigers das Bestimmen eines Stromraumzeigers nicht zufriedenstellend ausführbar ist.

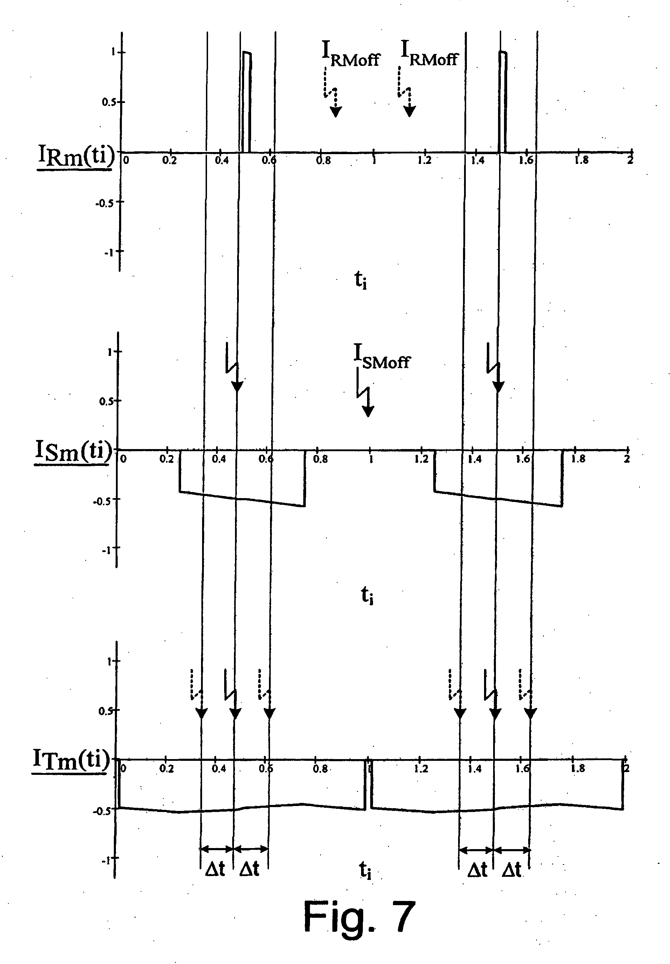

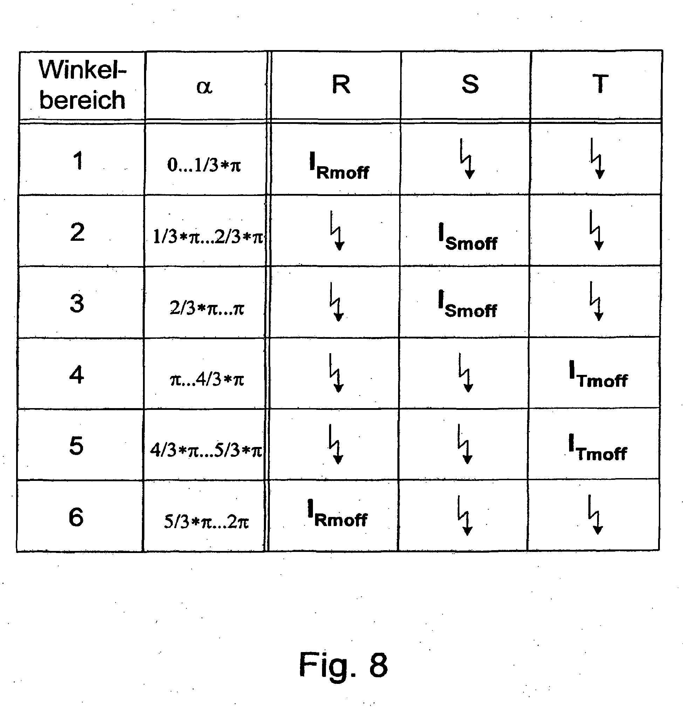

Aus der Schrift von Francesco Parasiliti, "Low cost current Sensing in DSP Based Drives", Industrial Electronics, 1999, ISIE'99, Proceedings of the IEEE, Volume 3, 1999, International Symposium, Volume 3, 1999, ist ein Umrichter bekannt, bei dem Shuntwiderstände in allen unteren Zweigen der Halbbrücken als Mittel zur Erfassung der jeweiligen Ströme angeordnet sind. Alle drei Strommesswerte werden erfasst, wobei die Messanstöße in der zeitlichen Mitte desjenigen Zeitabschnitts innerhalb einer Pulsweitenmodulationsperiode liegen, in welchem der diskrete Schaltzustand (000), also der Nullvektor $v_0$, anliegt (Seite 1287, linke Spalte und Figur 7). Bei der konkreten Ausführung ist ein kleiner Zeitversatz zu dieser Mitte wegen Berücksichtigung von Totzeiten, Signallaufzeiten und dergleichen, vorhanden. Aus den zugehörigen Messwerten wird dann der Stromraumzeiger bestimmt. Nachteil ist dabei allerdings, dass in den schattierten Bereichen des Hexagons (Seite 1287, linke Spalte, letzter Abschnitt und Figur 8) keine oder nur eine ungenaue Bestimmung des Stromraumzeigers möglich ist, da in diesen schattierten Bereichen entweder kein Nullvektor verwendet wird oder nur sehr kurz. Wenn nämlich der Nullvektor nicht vorhanden ist oder nur sehr kurz anliegt, ist damit automatisch in einer Phase kein oder nur ein sehr kurzes Strommesssignal vorhanden, welches somit für eine Auswertung nicht oder nur ungenau zur Verfügung steht. Daraus resultiert, dass im Falle eines über eine Pulsweitenmodulationsperiode gemittelten Ausgangsspannungsraumzeigers aus dem schattierten Bereich (Seite 1287, Figur 8) mindestens ein Strommesswert verfälscht ist.

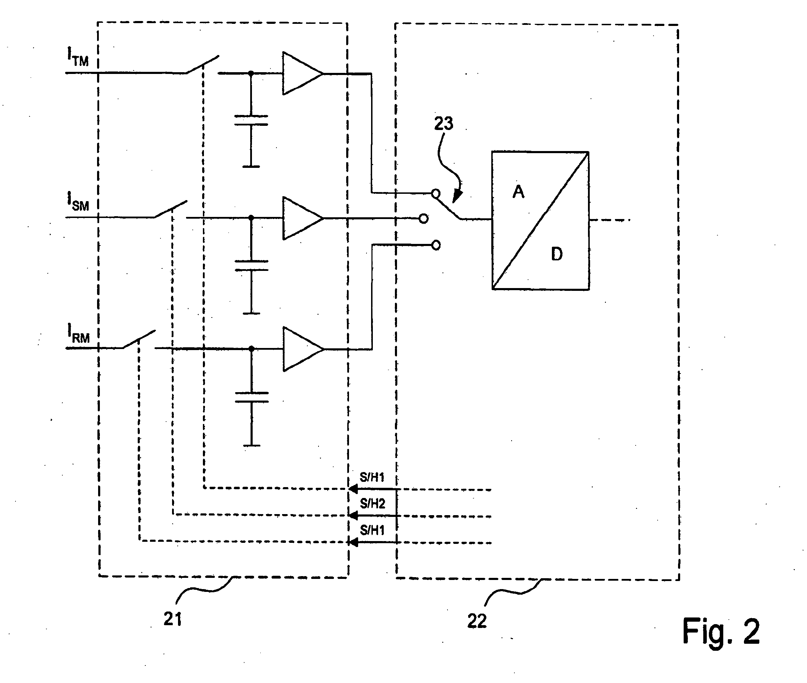

Aus der US 5 815 391 ist ein Umrichter bekannt, bei dem in allen unteren Zweigen der Halbbrücken Mittel zur Erfassung der jeweiligen Ströme angeordnet sind (Figur 2A). In der zugehörigen Tabelle (Figur 2B) wird erklärt, dass der Strom in der Phase A abhängig von den Schaltzuständen messbar (beispielhaft 1. Zeile: messbar;) oder aus den beiden anderen Strom-Messwerten berechenbar ist (5. Zeile: berechenbar;). Wenn jedoch der untere Schalter der Phase A und ein weiterer unterer Schalter geöffnet sind, ist der Strommesswert der Phase A nicht bestimmbar. Solche Schaltzustände sind in dieser Schrift als 'unknown' bei der Phase A gekennzeichnet.

Die genannte Tabelle 2B und das geschilderte Problem beziehen sich auf die Schaltzustände, also den jeweiligen Augenblickszustand des Umrichters. Die genannte Tabelle 2B bezieht sich nur auf Phase A. Es lassen sich aber die zugehörigen Tabellen für die Phasen B und C aufstellen. Dabei ist leicht zu erkennen, dass bei einigen Schaltzuständen, nämlich (111), (110), (101), (011), kein oder nur ein Strommesswert bestimmbar ist und somit auf keinen Fall ein Stromraumzeiger für diese Augenblickszustände. Aus der US 5 815 391 geht daher nicht hervor, wie ein Stromraumzeiger zu bestimmen ist, welcher dem über eine Pulsweitenmodulationsperiode gebildeten Mittelwert des real vorhandenen Stromraumzeigers entspricht. Insbesondere ist nicht dargestellt, wie vorzugehen ist, damit der Stromraumzeiger nicht durch Stromripple verfälscht ist.

Die Dauer eines 'known'- Schaltzustandes innerhalb einer Pulsweitenmodulationsperiode hängt von folgenden Faktoren ab:

Trägerfrequenz der Pulsweitenmodulation,
Art und Weise des Pulsweitenmodulationsverfahrens. Wenn diese Dauer eines 'known'-Schaltzustandes zu kurz ist, ist der Stromraumzeiger nicht bestimmbar.

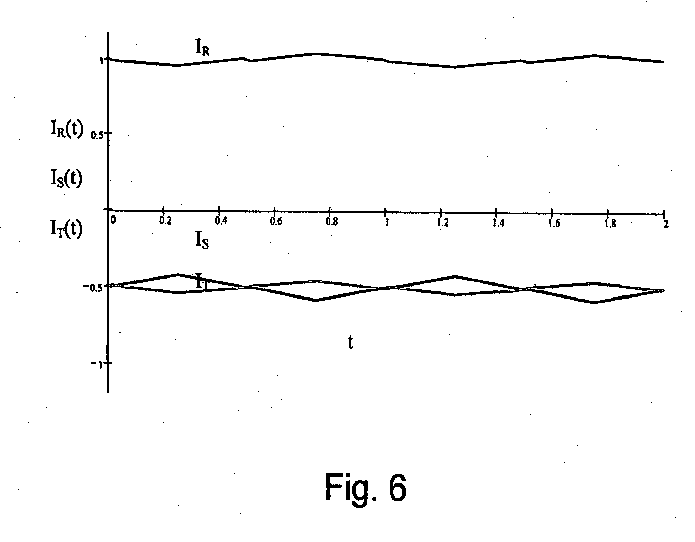

Wie das Pulsweitenmodulationsverfahren ausgeführt wird, ist in dieser Schrift nicht näher erläutert; es ist dem Fachmann jedoch klar, dass die Schrift lehrt, dass diese 'unknown'-Zustände ein Problem darstellen. In Spalte 1, Zeile 40 - 44 wird von einem 'Zurückrechnen' gesprochen, das aber nicht ausführbar beschrieben ist. Die Schrift lehrt den Fachmann, dass das Problem der 'unknown'-Zustände umgangen werden kann, indem gemäß den Figuren 5 und 6 sowohl in den oberen als auch in den unteren Zweigen der Halbbrücken Messmittel, insbesondere potentialfreie Messmittel, wie Rogowski-Spulen oder dergleichen, eingesetzt werden. Durch geschicktes Kombinieren der Messsignale, insbesondere Addition der Messsignale der unteren und der oberen Messmittel, wird ein kontinuierliches Strommesssignal erreicht und die 'unknown'-Zustände stellen kein Problem mehr dar.

Diese Lehre der US 5 815 391, sowohl in den oberen als auch in den unteren Zweigen der Halbbrücken Messmittel einzusetzen, wäre auch auf die vorgenannte IEEE Schrift anwendbar. Auf diese Weise wäre die Strommessung in den dort schattierten Bereichen problemlos und genau ausführbar. Allerdings müssten aufwendige Messmittel, insbesondere solche zur Überwindung der Potentialbarriere und somit kostspielige, vorgesehen werden. Die Lösungen wären also sehr aufwendig und kostspielig.

Aus der WO 03/041258 A ist der Oberbegriff des Anspruches 1 bekannt.

Der Erfindung liegt daher die Aufgabe zugrunde, einen Umrichter weiterzubilden, bei dem auf möglichst viele kostspielige Teile verzichtet werden kann und insbesondere bei Massenproduktion eine kostengünstige Herstellung erreichbar ist und trotzdem ein Verfahren zur Bestimmung eines Stromraumzeigers ausführbar ist.

Erfindungsgemäß wird die Aufgabe bei dem Verfahren zur Bestimmung eines Stromraumzeigers nach den in Anspruch 1, bei dem Umrichter nach den in Anspruch 9 angegebenen Merkmalen gelöst.

Wichtige Merkmale der Erfindung bei dem Verfahren sind, dass es zur Bestimmung eines Stromraumzeigers vorgesehen ist,
insbesondere zur Verwendung in einem Steuer- und/oder Regelverfahren,
für einen pulsweitenmoduliert betriebenen Umrichter, umfassend eine Signalelektronik, eine Leistungsendstufe mit in drei, jeweils einen unteren und einen oberen Zweig aufweisende Halbbrücken angeordneten Leistungsschaltern sowie in den drei oberen oder unteren Zweigen der Halbbrücke angeordnete Mittel zur Abtastung der jeweiligen Ströme,
wobei die Mittel zur Abtastung mit wahlweise verschiedener Verstärkung betrieben werden.

Von Vorteil ist dabei, dass während des Betriebes bedarfsweise die Verstärkung änderbar ist und somit die Stromauflösung an Betriebszustände entsprechend anpassbar ist. Alternativ ist eine erste Verstärkung bei Verwendung einer ersten Sorte von Leistungsschaltern und/oder Shunt-Widerständen und eine zweite Verstärkung bei einer zweiten Sorte von Leistungsschaltern und/oder Shunt-Widerständen aktivierbar und verwendbar. Somit ist innerhalb einer Baureihe stets dieselbe Steuerelektronik mit Messverstärkerschaltungen der Stromerfassung verwendbar - auch wenn verschiedene Leistungsschalter verwendet sind.

Bei einer vorteilhaften Ausgestaltung umfassen die Mittel jeweils eine Verstärkerschaltung, deren jeweilige Verstärkung auf verschiedene Werte wahlweise bringbar ist. Von Vorteil ist dabei, dass je nach genannter Anforderung die Verstärkung entsprechend angepasste Werte aufweist.

Insbesondere umfassen die Mittel jeweils zwei, wahlweise betreibbare Verstärkerschaltungen, deren jeweilige Verstärkung verschieden ist.

Bei einer vorteilhaften Ausgestaltung wird die Verstärkung während des laufenden Steuer- und **Regelverfahrens umgeschaltet**, insbesondere zur Erreichung einer besseren Auflösung bei der Stromerfassung. Von Vorteil ist dabei, dass je nach Betriebszustand eine geeignete Auflösung wählbar ist.

Bei einer vorteilhaften Ausgestaltung werden dieselben Mittel zur Abtastung bei verschiedenen **Leistungsschaltern** verwendet, wobei die Schalter für verschieden große maximal zulässige Ströme oder Leistungen verwendbar sind. Von Vorteil ist dabei, dass eine hohe Varianz an Umrichtern erzeugbar ist unter Anwendung einer geringen Teilezahl und somit geringer Lagerkosten.

Bei einer vorteilhaften Ausgestaltung wird nach geänderter Verstärkung der einer jeweiligen Phase zugeordneten Stromerfassungen zunächst der Offset und/oder die Verstärkung der der jeweiligen Phase zugeordneten Stromerfassung bestimmt und danach berücksichtigt. Von Vorteil ist dabei, dass die Stromerfassung verbessert ausführbar ist und das Umschalten somit störungsfrei ausführbar ist. Außerdem ist die Stromerfassung der Phasenströme gleichmäßiger ausführbar und somit ein verbessertes Regelverhalten erzielbar.

Bei einer vorteilhaften Ausgestaltung wird zur Bestimmung der Verstärkung im **jeweiligen** Brückenzweig ein Strom eingeprägt und **bestimmt.** Von Vorteil ist dabei, dass ein definierter Strom vorgesehen ist und somit die Bestimmung der Verstärkung in den verschieden den Phasen zugeordneten Brückenzweigen gleichmäßig ermöglicht ist.

Wichtige Merkmale bei dem Umrichter sind, insbesondere bei dem pulsweitenmoduliert betriebenen Umrichter, dass der Umrichter eine Signalelektronik, eine Leistungsendstufe mit in drei, jeweils einen unteren und einen oberen Zweig aufweisende Halbbrücken angeordneten Leistungsschaltern sowie in den drei oberen oder unteren Zweigen der Halbbrücke angeordnete Mittel zur Abtastung der jeweiligen Ströme umfasst, wobei die Mittel zur Abtastung abhängig vom Zustand eines Wahlmittels mit verschiedener Verstärkung betreibbar sind.

Insbesondere umfasst jedes Mittel mindestens zwei Verstärkerschaltungen, wobei nur jeweils eines betrieben wird. Von Vorteil ist dabei, dass Hardware-Teile, wie Leiterplatte mit Signalelektronik, umfassend Messverstärker der Stromerfassung, mehrfach verwendbar sind, also bei verschiedenen Leistungsklassen von Leistungshalbleiterschaltern einsetzbar sind. Somit ist eine hohe Varianz mit einer geringen Teilezahl erzeugbar.

Bei einer vorteilhaften Ausgestaltung ist das Wahlmittel als Wahlschalter oder als ein anderes in Hardware realisiertes Mittel ausgeführt. Von Vorteil ist dabei, dass der Schalter einfach realisierbar ist.

Bei einer vorteilhaften Ausgestaltung ist das Wahlmittel als Parameterwert oder anderes in Software realisiertes Mittel ausgeführt ist. Von Vorteil ist dabei, dass keine zusätzliche Hardware notwendig ist.

Bein einer Leiterplatte für einen Umrichter ist vorsehbar, dass der Umrichter Steuerelektronik umfasst, wobei die Leiterplatte zumindest Mittel zur Stromerfassung umfasst, wobei die Mittel jeweils mindestens zwei Messverstärkerschaltungen aufweisen, wobei nur der Ausgang einer der Messverstärkerschaltungen als erfasster Stromwert der Steuerelektronik des Umrichters zugeführt wird.

Von Vorteil ist dabei, dass die Leiterplatte für verschiedene Sorten von Leistungselektronik verwendbar ist, insbesondere verschiedene Leistungsklassen von Leistungselektronik.

Bei einer Leiterplatte für einen Umrichter ist vorsehbar, dass sie für einen Umrichter vorgesehen ist, wobei der Umrichter Steuerelektronik umfasst, wobei die Leiterplatte zumindest Mittel zur Stromerfassung umfasst, wobei die Mittel jeweils eine auf mindestens zwei Messverstärkungen umschaltbaren Messverstärkerschaltung aufweisen, wobei eine Steuerleitung von der Steuerelektronik zur Messverstärkerschaltung zum Ansteuern des Umschaltens vorgesehen ist.

Von Vorteil ist dabei, dass die Verstärkung während des Betriebs, also bei laufendem Regelverfahren, umschaltbar ist und somit die Auflösung der Stromerfassung veränderbar ist und anpassbar ist an den jeweiligen Bedarf. Somit ist ein Regeln in einem speziell ausgewählten Arbeitsbereich verbessert ausführbar.

Bei einer Baureihe von Umrichtern ist vorsehbar, dass die Baureihe zumindest eine erste und zweite Variante von Umrichtern umfasst, wobei die Varianten sich zumindest in der maximal zulässigen Nennleistung unterscheiden,

wobei in allen Varianten eine gleiche Leiterplatte vorgesehen ist, die zumindest die Messverstärkerschaltungen der Stromerfassung umfasst, wobei jeder Stromerfassung zwei Messverstärkerschaltungen zugeordnet sind, wobei nur der Ausgang einer der Messverstärkerschaltungen als erfasster Stromwert der Steuerelektronik des Umrichters zugeführt wird.

Von Vorteil ist dabei, dass eine hohe Varianz in der Baureihe mit geringer Teilezahl erreichbar ist.

Bei einer Baureihe von Umrichtern ist vorsehbar, dass die Baureihe zumindest eine erste und zweite Variante von Umrichtern umfasst, wobei die Varianten sich zumindest in der maximal zulässigen Nennleistung unterscheiden, wobei in allen Varianten eine gleiche Leiterplatte vorgesehen ist, die zumindest die Messverstärkerschaltungen der Stromerfassung umfasst, wobei jeder Stromerfassung eine auf mindestens zwei Messverstärkungen umschaltbare Messverstärkerschaltung zugeordnet ist, wobei eine Steuerleitung von der Steuerelektronik zur Messverstärkerschaltung zum Ansteuern des Umschaltens vorgesehen ist.

Von Vorteil ist dabei, dass ein Umschalten während des Betriebs, also laufendem Regelverfahren, ermöglicht ist.

Bei einer vorteilhaften Ausgestaltung wird zur Bestimmung der Messverstärkungen in jeder Phase ein gleichgroßer Strom eingeprägt und dann bestimmt und daraus die zur jeweiligen Phase zugehörige Messverstärkung bestimmt. Von Vorteil ist dabei, dass ein definierter Strom vorgebbar ist und daraus die Verstärkung bestimmbar ist, insbesondere für alle Stromphasen gleichmäßig.

Bei einer vorteilhaften Ausgestaltung wird zur Offsetbestimmung der einer jeweiligen Phase zugeordneten Stromerfassung der Strom in einem ausgeschalteten Brückenzweig erfasst, insbesondere vor der Bestimmung der jeweiligen Messverstärkung. Von Vorteil ist dabei, dass die Bestimmung der Verstärkung verbessert und mit höherer Genauigkeit ausführbar ist.

Bei einer vorteilhaften Ausgestaltung wird in jeder Phase ein gleichgroßer Strom eingeprägt und dann bestimmt wird und daraus die zur jeweiligen Phase zugehörige Messverstärkung bestimmt wird.

Von Vorteil ist dabei, dass die erfassten Stromwerte abgleichbar sind, insbesondere anpassbar. Somit ist eine für alle drei Phasen gleichmäßige Stromerfassung vorsehbar. Der erfasste Strom ist also nicht verzerrt. Wenn beispielsweise ein betragsmäßig konstanter Stromvektor auftritt, ist nach Erfassung der drei Phasenströme die Rekonstruktion des Stromraumzeigers unverzerrt, also auch unabhängig von der Winkellage gleichartig ermöglicht.

Bei einer vorteilhaften Ausgestaltung wird zur Offsetbestimmung der einer jeweiligen Phase zugeordneten Stromerfassung der Strom in einem ausgeschalteten Brückenzweig erfasst, insbesondere vor der Bestimmung der jeweiligen Messverstärkung. Von Vorteil ist dabei, dass der Offset vom Messergebnis subtrahierbar ist und somit eine weiter verbesserte Stromerfassung ermöglicht ist. In Zusammenwirkung ist also eine sehr genaue Erfassung des Stromraumzeigers ermöglicht, wobei der Betrag des Stromraumzeigers abhängt vom Absolutwert der Messverstärkungen, die unbekannt bleiben. Mit der Erfindung ist aber ein winkelmäßig unverzerrtes Bestimmen des Stromraumzeigers ermöglicht, der sogar noch Offsetfrei bestimmbar ist. Auf diese Weise ist die Drehmoment-Modellwertbildung der Regelung des Umrichters sehr gut und die Regeleigenschaften, wie Regelgüte, stark verbessert.

Bei einer vorteilhaften Ausgestaltung ist der Umrichter mit einer Brückenzweige umfassenden Endstufe derart ausgestattet, dass

- in einem ersten Schritt zumindest ein oberer und der zugehörige untere Brückenzweig, die einer ersten Phase zugeordnet sind, ausgeschaltet sind und derjenige obere Brückenzweig, der einer zweiten Phase zugeordnet ist, und derjenige untere Brückenzweig, der einer dritten Phase zugeordnet ist, eingeschaltet sind, insbesondere wodurch ein unipolarer Strom eingeprägt wird, insbesondere für einen derart langen Zeitabschnitt, dass ein konstanter Strom eingeprägt wird,

- in zumindest dem eingeschalteten Brückenzweig mit den Mitteln zur Abtastung des Stromes mindestens ein Stromabtastwert bestimmt wird und daraus die dem eingeschalteten Brückenzweig zugeordnete, aktuelle Messwertverstärkung für die Stromerfassung bestimmt und berücksichtigt wird,

- in einem zweiten Schritt und dritten Schritt der erste Schritt wiederholt wird, wobei die den drei Phasen zugeordneten Brückenzweige jeweils zyklisch getauscht werden.

Von Vorteil ist dabei, dass ohne zusätzliche Mittel über die für die Stromerfassung notwendigen Mittel hinaus ein Abgleich der Messverstärkungen in den einzelnen Phasen einfach und schnell ermöglicht ist, insbesondere in sehr kurzer Zeit. Dabei wird durch Anlegen einer Spannung ein Strom nur derart lange eingeprägt, dass einen stationären eingeschwungenen Zustand erreicht. Für die Ausführung der Erfindung ist also nur zusätzliche Software notwendig.

Bei einer vorteilhaften Ausgestaltung wird in einem jeweiligen Zwischenschritt, der nach dem genannten jeweiligen ersten, zweiten und dritten Schritt angeordnet ist, statt des jeweils eingeschalteten oberen der zugehörige untere Brückenzweig derselben Phase eingeschaltet und statt des jeweiligen eingeschalteten unteren der obere Brückenzweig eingeschaltet wird, insbesondere wodurch die eingeprägte Stromrichtung umgekehrt wird. Insbesondere ist der jeweilige Zwischenschritt unmittelbar nach dem ersten, zweiten und dritten Schritt angeordnet ist, also der erste Schritt gefolgt von einem Zwischenschritt und ebenso der zweite von einem entsprechenden Zwischenschritt und ebenso der dritte von einem entsprechenden Zwischenschritt. Von Vorteil ist dabei, dass ein eingeprägter Strom umgepolt wird und somit eine drehmomentfreie Bestimmung der Messverstärkungen ausführbar ist.

Bei einer vorteilhaften Ausgestaltung werden für das Regelverfahren als zur jeweiligen Phase zugehörige Strommesswerte die erfassten Strommesswerte durch die zur jeweiligen Phase zugehörige Messverstärkung dividiert, insbesondere also normierte Strommesswerte verwendet werden. Von Vorteil ist dabei, dass ein Abgleich der Messverstärkungen der Phasen zueinander in einfacher Weise ermöglicht ist.

Bei einer vorteilhaften Ausgestaltung wird zur Offsetbestimmung der einer jeweiligen Phase zugeordneten Stromerfassung der Strom in einem ausgeschalteten Brückenzweig erfasst, insbesondere vor der Bestimmung der jeweiligen Messverstärkung. Von Vorteil ist dabei, dass der Offset in besonders einfacher Weise bestimmbar ist.

Bei einer vorteilhaften Ausgestaltung wird

- zur Ansteuerung der Halbbrücken ein Pulsmuster innerhalb eines Zeitabschnitts, der eine Pulsweitenmodulationsperiode beträgt, derart generiert, dass zu einem ersten in der Pulsweitenmodulationsperiode liegenden Abtastzeitpunkt jeweils zumindest ein oberer oder ein unterer, mit Mitteln zur Abtastung des Stromes ausgestatteter Brückenzweig ausgeschaltet ist,

- im ausgeschalteten Brückenzweig mit den Mitteln zur Abtastung des Stromes mindestens ein Stromabtastwert bestimmt und daraus ein aktueller Offsetwert für die Stromerfassung bestimmt und berücksichtigt,

- der ausgeschalteten Brückenzweig abhängig vom mittleren Ausgangsspannungsraumzeiger verschieden gewählt und

aus den Stromabtastwerten der Stromraumzeiger bestimmt, wobei der mittlere Ausgangsspannungsraumzeiger bestimmt ist durch die Differenzen der über eine Pulsweitenmodulationsperiode gemittelten Ausgangspotentiale der drei Ausgangsphasen.

Von Vorteil ist dabei, dass die Offsetbestimmung in einfacher Weise bei einem Umrichter ausführbar ist.

Bei einer vorteilhaften Ausgestaltung wird

- zur Ansteuerung der Halbbrücken ein symmetrisches Pulsmuster innerhalb eines Zeitabschnitts, der eine Pulsweitenmodulationsperiode beträgt, derart generiert, dass zu einem weiteren mittig in der Pulsweitenmodulationsperiode liegenden Abtastzeitpunkt jeweils ein Paar der drei oberen oder ein Paar der drei unteren, mit Mitteln zur Abtastung des Stromes ausgestatteten Brückenzweige eingeschaltet sind,

- in jedem der beiden eingeschalteten Brückenzweige mit den Mitteln zur Abtastung des Stromes mindestens ein Stromabtastwert bestimmt,

- das Paar von eingeschalteten Brückenzweigen abhängig vom mittleren Ausgangsspannungsraumzeiger verschieden gewählt und

- aus den Stromabtastwerten der Stromraumzeiger bestimmt, wobei der mittlere Ausgangsspannungsraumzeiger bestimmt ist durch die Differenzen der über eine Pulsweitenmodulationsperiode gemittelten Ausgangspotentiale der drei Ausgangsphasen.

Insbesondere wird

- zur Ansteuerung der Halbbrücken ein Pulsmuster innerhalb eines Zeitabschnitts, der eine Pulsweitenmodulationsperiode beträgt, derart generiert, dass zu einem ersten in der Pulsweitenmodulationsperiode liegenden Abtastzeitpunkt jeweils zumindest ein oberer oder ein unterer, mit Mitteln zur Abtastung des Stromes ausgestatteter Brückenzweig ausgeschaltet ist,

- im ausgeschalteten Brückenzweig mit den Mitteln zur Abtastung des Stromes mindestens ein Stromabtastwert bestimmt und daraus ein aktueller Offsetwert für die Stromerfassung bestimmt und berücksichtigt,

- der ausgeschaltete Brückenzweig abhängig vom mittleren Ausgangsspannungsraumzeiger verschieden gewählt und

- aus den Stromabtastwerten der Stromraumzeiger bestimmt, wobei der mittlere Ausgangsspannungsraumzeiger bestimmt ist durch die Differenzen der über eine Pulsweitenmodulationsperiode gemittelten Ausgangspotentiale der drei Ausgangsphasen.

Von Vorteil ist dabei, dass ein aktueller Offsetwert bestimmt wird und somit ein offsetbefreite Erfassung des Stromes ermöglicht ist, wodurch ein besseres Regelverhalten des Umrichters erzielbar ist. Auch bei einer gegebenenfalls auftretenden Temperaturdrift des Offsetwertes des Messverstärkers ist ein stets aktuell gültiger Wert bestimmt. Da die Drift bei industrieüblichen Betriebsweisen eine charakteristische Zeitkonstante aufweist, die größer ist als eine bei zu einer im Bereich zwischen 1 kHz und 100 kHz liegenden Pulweitenmodulationsfrequenz gehörenden Pulsweitenmodulationsperiode, ist es nicht notwendig in jeder Pulsweitenmodulationsperiode einen Offsetwert zu bestimmen sondern es genügt, dies in größeren zeitlichen Abständen auszuführen. Außerdem ist bei der Erfindung keine Sample-Holdschaltung notwendig, obwohl Strommesswerte zu mehreren Phasen erfassbar sind und nur ein Analog/Digital-Wandler verwendet werden muss.

Da bei der Variante mit in allen drei unteren Zweigen der Halbbrücken angeordneten Mittel zur Erfassung der jeweiligen Ströme immer diejenige Phase, bei der das entsprechende Pulsweitenmodulations-Signal kürzer als eine Mindestdauer im LOW-Zustand ist, nicht verwendet wird, ist ein sicheres Bestimmen des Stromraumzeigers gewährleistet unter Verwendung eines geeigneten Pulsweitenmodulationsverfahrens, insbesondere eines symmetrischen Pulsweitenmodulationsverfahrens. Dabei ist im jeweiligen LOW-Zustand der untere Leistungsschalter geschlossen und der obere geöffnet. Bei einem HIGH-Zustand liegt der umgekehrte Fall vor.

Außerdem sind möglichst viele kostspielige Teile verzichtbar, insbesondere potentialtrennende Stromfühler, da die Ströme nicht in den Ausgangszweigen sondern in den unteren oder oberen Zweigen der Halbbrücken gemessen werden. Bei Massenproduktion ist eine kostengünstige Herstellung erreichbar.

Insbesondere werden mit den zwei der drei Mitteln zur Erfassung der Ströme die zugehörigen Stromabtastwerte nicht gleichzeitig innerhalb der Pulsweitenmodulationsperiode erfasst und/oder die zugehörigen Messanstöße nicht gleichzeitig ausgeführt. Von Vorteil ist dabei, dass bei dem Umrichter ein Mikrocontroller mit nur einem einzigen Analog-Digital-Wandler und keiner zusätzlichen Sample-Hold-Schaltung verwendbar ist, also keiner extern vom Mikrocontroller angeordneten Sample-Hold-Schaltung.

Insbesondere wird mit mindestens einem der zwei Mittel mehr als einmal pro Pulsweitenmodulationsperiode ein Stromabtastwert erfasst und/oder mehr als ein Messanstoß innerhalb einer Pulsweitenmodulationsperiode vorgesehen.

Insbesondere wird mit einem ersten der zwei Mittel genau zweimal pro Pulsweitenmodulationsperiode ein Stromabtastwert erfasst und der Messanstoß für das zweite der zwei Mittel liegt in der Mitte der Pulsweitenmodulationsperiode. Vorteiligerweise liegen die zwei Messanstöße des ersten der zwei Mittel äquidistant zur Mitte der Pulsweitenmodulationsperiode, das heißt, dass der zeitliche Abstand vom ersten Messanstoß des ersten Mittels zum ersten Messanstoß des zweiten Mittels gleich groß ist wie der zeitliche Abstand vom Messanstoß des zweiten Mittels zum zweiten Messanstoß des ersten Mittels und der letztgenannte Messanstoß des zweiten Mittels in der Mitte der Pulsweitenmodulationsperiode liegt.

Bei der Variante mit in allen drei unteren Zweigen der Halbbrücken angeordneten Mittel zur Erfassung der jeweiligen Ströme bezeichnet die zeitliche Mitte der Pulsweitenmodulations-Periode die zeitliche Mitte der jeweiligen LOW-Zustände. Während dieser Zustände sind Strommesssignale an den Mitteln zur Erfassung der jeweiligen Ströme vorhanden.

Zur Bestimmung des Stromraumzeigers sind die Strommesswerte von den zu den beiden genannten Mitteln gehörigen Phasen ausreichend. Es sind stets die insgesamt drei Strommesswerte der beiden Mittel erhältlich, weil ein vorteilhaftes Pulsweitenmodulations-Verfahren verwendet wird, wie beispielsweise ein symmetrisches Pulsweitenmodulations-Verfahren, und der Ausgangsspannungsraumzeiger auf den Innkreis des Hexagons begrenzt wird. Dies bedeutet beispielsweise auch, dass keine Eckvektoren des Hexagons dauerhaft über eine ganze Pulsweitenmodulations-Periode hinweg auftreten.

Damit der Stromraumzeiger frei vom Einfluss des durch die PULSWEITENMODULATION bedingten Stromripples bleibt, müssen die Messanstöße an geeigneten Zeitpunkten erfolgen. Dafür vorteilhaft wären die Zeitpunkte der Messanstöße der beiden Mittel jeweils gleichzeitig und in die Mitte der Pulsweitenmodulations-Periode zu legen. Dann wären jedoch entweder zwei A/D-Wandler oder externe Sample-Hold-Schaltungen notwendig, was kostspielig wäre. Es werden aber mit dem ersten Mittel zwei zeitlich versetzte Messanstöße ausgeführt. Der Zeitpunkt des Messanstoßes des zweiten Mittels ist in die Mitte der Pulsweitenmodulations-Periode gelegt. Die Zeitpunkte der beiden Messanstöße des ersten Mittels weisen jeweils den selben zeitlichen Abstand zur Mitte der Pulsweitenmodulations-Periode auf. Somit ist infolge der Mittelwertbildung und wegen der Symmetrie des Stromripples, der wegen des symmetrischen Pulsweitenmodulations-Verfahrens symmetrisch zur Mitte der Pulsweitenmodulations-Periode verläuft, ein Strommesswert unter Verwendung des ersten Mittels bestimmt, der gleich ist zu demjenigen Strommesswert, der mit dem ersten Mittel am Zeitpunkt der Mitte der Pulsweitenmodulations-Periode messbar wäre.

Insbesondere wird der Stromraumzeiger für jede Pulsweitenmodulationsperiode bestimmt. Von Vorteil ist dabei, dass auch bei kleiner Pulsweitenmodulationsfrequenz eine möglichst häufige Bestimmung des Stromraumzeigers vorsehbar ist zur Verbesserung der Regelgüte des Regelverfahrens des Umrichters.

Bei einer vorteilhaften Ausführung liegt der erste Abtastzeitpunkt mittig in der Pulsweitenmodulationsperiode oder mittig in einem Zeitabschnitt, währenddessen der jeweilige Brückenzweig ausgeschaltet wird. vorteiligerweise ist somit ein im vorangegangenen Zeitabschnitt auftretender Strom abgeklungen und es sind keine Restströme mehr vorhanden.

Bei einer vorteilhaften Ausführung liegen mehrere erste Abtastzeitpunkte in jeweils einem Zeitabschnitt und der Mittelwert der erfassten Strommesswerte wird zur Bestimmung des Offsetwerts verwendet. Von Vorteil ist dabei, dass über einen Multiplexer die Messwerte von nur einem Analog/Digital-Wandler erfassbar sind, der zeitlich nacheinander die Strommesswerte von verschiedenen Brückenzweigen erfassbar macht.

Bei einer vorteilhaften Ausführung werden in einem weiteren ausgeschalteten Brückenzweig zeitlich symmetrisch um vor und nach dem ersten Abtastzeitpunkt Stromabtastwerte erfasst zur Bestimmung des Offsetwerts. Von Vorteil ist dabei, dass die erfassten Werte für verschiedene ausgeschaltete Brückenzweige im Wesentlichen einer zeitsynchronen Erfassung entsprechen.

Bei bevorzugten Ausführungen werden die Strommesssignale auf dem unteren Zwischenkreispotential gebildet, wobei den jeweiligen Halbbrücken zugeordnete Strommesswerte aus Stromabtastwerten bestimmt werden, die aus den Strommesssignalen abgeleitet werden. Insbesondere entspricht das Bezugspotential der Signalelektronik, die eine Steuer- und Regeleinrichtung des Umrichters umfasst, dem Bezugspotential, auf welchem die Strommesssignale gebildet werden. Von Vorteil ist dabei, dass Optokoppler zur Potentialtrennung einsparbar sind. Das Bezugspotential der Signalelektronik weist ebenfalls das untere Zwischenkreispotential auf. Wesentlicher Vorteil ist dabei, dass die Ansteuersignale der unteren Leistungsschalter in den Halbbrücken von der Signalelektronik generierbar sind, ohne dass ein hoher Spannungsabstand auftritt, der eine aufwendige Potentialtrennung notwendig machen würde. Nur die Ansteuersignale der oberen Leistungsschalter müssen über Optokoppler oder andere potentialtrennende Vorrichtungen angesteuert werden. Insbesondere bei einem Umrichter, der keine Anschlüsse für einen Geber, wie Drehzahl- oder Positionsgeber, oder für andere potential-abzutrennende Vorrichtungen aufweist, ist somit ein wesentlicher Schritt zur Kosteneinsparung und eine Reduktion der Anzahl der Teile erreichbar.

Vorteilhaft sind als untere Leistungsschalter in den Halbbrücken Leistungshalbleiterschalter, wie IGBT vom Typ npn, verwendbar, die mit Steuerspannungen ansteuerbar sind, die als Bezugspotential das untere Zwischenkreispotential aufweisen.

Bei Verwendung komplementärer Leistungshalbleiterschalter, wie beispielsweise IGBT vom Typ pnp, ist dann als Bezugspotential für die Strommessung und für die Signalelektronik das obere Zwischenkreispotential zu wählen und der Umrichter entsprechend zu gestalten.

Bei einer bevorzugten Ausführung wird das Paar abhängig vom Winkel des Ausgangsspannungsraumzeigers und nicht vom Pulsweitenmodulationsmuster verschieden ausgewählt. Von Vorteil ist dabei, dass die programmtechnische Realisierung besonders einfach ist.

Bei einer anderen Ausführung wird statt der einen Pulsweitenmodulationsperiode ein Zeitabschnitt von zwei oder mehreren Pulsweitenmodulationsperioden verwendet. Von Vorteil ist dabei, dass auch bei hoher Schaltfrequenz der Stromraumzeiger bestimmbar ist. Dabei ist zwar eine leichte Verfälschung vorhanden, die aber bei hoher Schaltfrequenz gering ist.

Das Erfassen des mit dem ersten Strommessmittel, also Mittel zur Erfassung der Ströme, erfassten Stromabtastwertes wird mittig in der Pulsweitenmodulationsperiode ausgeführt. Insbesondere wird mit einem zweiten der zwei Strommessmittel ein erster und ein zweiter zugehöriger Stromabtastwert symmetrisch vor und nach dem Erfassen eines mit dem ersten Strommessmittel erfassten Stromabtastwertes erfasst. Von Vorteil ist dabei, dass mit nur einem Analog-Digital-Wandler ohne externe Sample-Hold-Schaltungen Strommesswerte bestimmbar sind, die nicht von Pulsweitenmodulations-bedingten Stromripple verfälscht sind. Also ist die Bestimmung der Strommesswerte besonders einfach und mit wenig Rechenaufwand ausführbar.

Bei Verwendung zusätzlicher externer Sample-Hold-Schaltungen könnten mit den zwei der drei Mitteln zur Erfassung der Ströme die zugehörigen Stromabtastwerte gleichzeitig erfasst und/oder die zugehörigen Messanstöße gleichzeitig ausgeführt werden. Insbesondere würden die Messanstöße mittig in der Pulsweitenmodulationsperiode ausgeführt. Von Vorteil wäre dabei, dass die Bestimmung der Strommesswerte besonders einfach ist und trotzdem keine durch Stromripple verursachten Verfälschungen vorhanden sind.

Bei einer anderen bevorzugten Ausführung wird mit dem ersten der zwei Mittel zur Erfassung der Ströme ein zugehöriger Stromabtastwert mindestens eine Pulsweitenmodulationsperiode nach dem Erfassen eines zum zweiten Mittel zur Erfassung der Ströme zugehörigen Stromabtastwertes erfasst. Insbesondere liegen die zu den beiden Mitteln zur Erfassung der Ströme zugehörige Messanstöße in verschiedenen Pulsweitenmodulationsperioden. Von Vorteil ist dabei, dass auch bei hohen Schaltfrequenzen unter Verwendung nur eines einzigen Analog-Digital-Wandlers und ohne zusätzliche Sample-Hold-Schaltungen ein Stromraumzeiger bestimmbar ist, insbesondere ohne durch Stromripple verursachten Verfälschungen.

Bei einer bevorzugten Ausführung wird der erste Stromabtastwert des Paares mehr als einmal pro Pulsweitenmodulationsperiode erfasst und aus den erfassten Werten wird ein gemäß den Zeitpunkten der jeweiligen Erfassung interpolierter Wert und/oder Mittelwert gebildet. Insbesondere wird ein erster Stromabtastwert des Paares, der einer ersten Halbbrücke zugeordnet ist, vor und nach dem zweiten Stromabtastwert des Paares, der einer zweiten Halbbrücke zugeordnet, erfasst. Von Vorteil ist dabei, dass durch Interpolation oder auch Mittelwertbildung ein fiktiver Strommesswert mit guter Genauigkeit bestimmbar ist, der zeitgleich zum anderen erfassten Stromabtastwert vorhanden ist.

Bei einer bevorzugten Ausführung entspricht der erfasste Stromraumzeiger dem Mittelwert des Stromraumzeigers über eine Pulsweitenmodulationsperiode. Von Vorteil ist dabei, dass der infolge der Pulsweitenmodulation vorhandene Stromripple das Ergebnis und somit auch die Regelverfahren nicht verfälscht.

Wichtige Merkmale der Erfindung bei dem Umrichter, umfassend eine Signalelektronik und eine Leistungsendstufe, die in drei, jeweils einen unteren und einen oberen Zweig umfassende Halbbrücken angeordnete Leistungsschalter umfasst, wobei der Umrichter pulsweitenmoduliert betreibbar ist, sind, dass

- entweder in allen drei unteren oder in allen drei oberen Zweigen der Halbbrücken Mittel zur Erfassung der jeweiligen Ströme angeordnet sind,

- von den drei Mitteln zur Erfassung der Ströme erfasste Strommesssignale über einen Multiplexer nur einem einzigen Analog-Digital-Wandler zugeführt werden und/oder zuführbar sind.

Von Vorteil ist dabei, dass kostspielige potentialtrennende Mittel einsparbar und das Bauvolumen des Umrichters reduzierbar ist.

Bei einer bevorzugten Ausführung umfassen die Mittel zur Stromerfassung Widerstände, insbesondere Shunt-Widerstände. Von Vorteil ist dabei, dass die Stromerfassung äußerst kostengünstig sind.

Bei einer bevorzugten Ausführung sind die Mittel zur Stromerfassung derart in den Halbbrücken angeordnet, dass sie entweder mit dem oberen oder mit dem unteren Zwischenkreispotential verbunden sind. Von Vorteil ist dabei, dass Mittel zur Potentialtrennung einsparbar sind. Bei einer weiter bevorzugten Ausführung weist die Signalelektronik ein Bezugspotential auf, das auch Bezugspotential für die Mittel zur Stromerfassung ist. Wenn dieses Bezugspotential Uz- beträgt, dann sind die Mittel zur Potentialtrennung für die Ansteuersignale der unteren Leistungsschalter der Halbbrücken einsparbar. Wenn dieses Bezugspotential Uz+ beträgt, dann sind die Mittel zur Potentialtrennung für die Ansteuersignale der oberen Leistungsschalter der Halbbrücken einsparbar.

Bei einer bevorzugten Ausführung weist die Signalelektronik ein Bezugspotential auf, das auch Bezugspotential für die Mittel zur Stromerfassung ist. Von Vorteil ist dabei, dass kostspielige potentialtrennende Mittel einsparbar sind. Denn, wären die Mittel zur Stromerfassung in den Zuleitungen zum Motor vorgesehen, würden kostspielige potentialtrennende Mittel notwendig sein.

Bei einer bevorzugten Ausführung ist einem einzigen Analog-Digital-Wandler mittels eines Multiplexers und/oder Schalters jedes Mittel zur Stromerfassung zuordenbar. Von Vorteil ist dabei, dass der Umrichter kostengünstig ausführbar ist, insbesondere durch Einsparung von weiteren Analog-Digital-Wandlern.

Prinzipiell wäre es auch möglich, mehr als ein Analog-Digital-Wandler den Mitteln zur Stromerfassung zuzuordnen. Von Vorteil wäre dabei, dass bei Verwendung geeignet angeordneter Multiplexer das jeweils ausgewählte Paar von Mitteln zur Erfassung der Ströme den beispielsweise zwei Analog-Digital-Wandlern zuordenbar ist und zusätzliche Sample-Hold-Schaltungen einsparbar sind. Insbesondere wäre jedem Mittel zur Stromerfassung jeweils ein Analog-Digital-Wandler zuordenbar. Von Vorteil ist dabei, dass keine zusätzlichen Sample-Hold-Schaltungen notwendig sind und eine synchrone Erfassung der Stromabtastwerte gewährleistbar ist. Bevorzugt wäre dann auch zwischen jedem Mittel zur Stromerfassung und dem zuordenbaren Analog-Digital-Wandler jeweils eine Sample-Hold-Schaltung anordenbar. Von Vorteil wäre hierbei, dass der Stromraumzeiger ohne Verfälschung durch Stromripple bestimmbar ist und ein einziger Analog-Digital-Wandler genügt. Weiter bevorzugt könnte die Signalelektronik einen Mikrocontroller, der einen einzigen Analog-Digital-Wandler aufweist, und eine Sample-Hold-Schaltung aufweisen, die nicht vom Mikrocontroller umfasst ist, also eine zusätzliche externe. Von Vorteil wäre dabei, dass ein kostengünstiger Mikrocontroller verwendbar ist, der nur einen einzigen Analog-Digital-Wandler umfasst.

Bei einer bevorzugten Ausführung umfasst die Signalelektronik Mittel zur Erzeugung pulsweitenmodulierter Steuersignale für die Leistungsschalter und die Signalelektronik weist ein Bezugspotential auf, das auch Bezugspotential für die Mittel zur Stromerfassung ist. Von Vorteil ist dabei, dass Mittel zur Potentialtrennung einsparbar sind.

Bei einer vorteilhaften Ausführung ist einem einzigen Analog-Digital-Wandler mittels eines Multiplexers und/oder Schalters ein jeweiliges Mittel zur Stromerfassung zuordenbar. Somit sind dann kostspielige weitere Analog-Digital-Wandler verzichtbar.

Bei einer anderen vorteilhaften Ausführung sind die wesentlichen Merkmale, dass

- entweder in allen drei unteren oder in allen drei oberen Zweigen der Halbbrücken Mittel zur Erfassung der jeweiligen Ströme angeordnet sind,

- die Pulsweitenmodulationsfrequenz größer ist als eine Mindestfrequenz,

- innerhalb eines Zeitabschnitts, der zwei Pulsweitenmodulationsperioden beträgt, mit zwei der drei Mittel zur Erfassung der Ströme jeweils mindestens ein zugehöriger Stromabtastwert bestimmt wird und in beiden Pulsweitenmodulationsperioden derselbe mittlere Ausgangsspannungsraumzeigers ausgegeben wird,

- mit einem ersten Mittel des Paares ein erster Stromabtastwert in der Mitte der ersten der zwei Pulsweitenmodulationsperioden erfasst wird und mit einem zweiten Mittel des Paares ein zugehöriger Stromabtastwert in der Mitte der zweiten, also unmittelbar nachfolgenden Pulsweitenmodulationsperiode erfasst wird,

- aus den mit diesem Paar von Mitteln bestimmten Stromabtastwerten ein Stromraumzeiger gebildet wird oder die Stromwerte in den Ausgangszweigen gebildet werden, insbesondere zur Verwendung in einem Steuer- und/oder Regelverfahren, und

- dieses Paar von Mitteln abhängig vom mittleren Ausgangsspannungsraumzeiger verschieden ausgewählt wird,

- und wobei der mittlere Ausgangsspannungsraumzeiger bestimmt ist durch die Differenzen der über eine Pulsweitenmodulationsperiode gemittelten Ausgangspotentiale der drei Ausgangsphasen.

Von Vorteil ist dabei, dass auch bei hohen Pulsweitenmodulations-Frequenzen ein einziger Analog-Digital-Wandler ausreichend ist und keine externen Sample-Hold-Schaltungen notwendig sind. Bei Unterschreiten der Mindestfrequenz, die beispielsweise 10 kHz beträgt, ist auf das zuvor beschriebene Verfahren umschaltbar. Somit sind die Vorteile sogar bei allen Pulsweitenmodulations-Frequenzen vorhanden.

Weitere vorteilhafte Ausgestaltungen ergeben sich aus den Unteransprüchen.

Bezugszeichenliste

1     Steuer- und Regelvorrichtung
21    Sample-Hold-Schaltung
22    Mikrocontroller
23    Multiplexer

Die Erfindung wird nun anhand von Abbildungen näher erläutert:

In der Figur 1 ist für einen dreiphasigen Umrichter eine Leistungsendstufe schematisch skizziert. Die Leistungsschalter mit zugeordneten Freilaufdioden sind dabei durch sechs Schaltersymbole $S_{Ro}$, $S_{So}$, $S_{To}$, $S_{Ru}$, $S_{Su}$ und $S_{Tu}$ bezeichnet. In den unteren Zweigen der Halbbrücken sind als Mittel zur Stromerfassung Shunt-Widerstände $R_R$, $R_S$ und $R_T$ angeordnet. Diese sind somit mit dem unteren Bezugspotential $U_Z$ verbunden, das auch gleichzeitig Bezugspotential der eine Steuer- und Regelvorrichtung 1 umfassenden Signalelektronik des Umrichters ist. Die motorseitigen Ausgangspotentiale des Umrichters sind $U_R$, $U_S$ und $U_T$; die Motorströme sind mit $I_R$, $I_S$ und $I_T$ bezeichnet.

Die Widerstände sind mit Verstärkerschaltungen $V_R$, $V_S$ und $V_T$ verbunden, die jeweils ausgangsseitig ein Strommesssignal $I_{RM}$, $I_{SM}$ und $I_{TM}$ erzeugen. Dabei ist jeder Phase in der Figur 1 und 2 jeweils eine Verstärkerschaltung zugeordnet und zeichnerisch dargestellt. Erfindungsgemäß wird jedoch jede dieser Verstärkerschaltungen aus zwei wahlweise verwendbaren Verstärkerschaltungen, die parallel angeordnet sind und verschieden starke Verstärkungen aufweisen, in Hardware realisiert. Alternativ ist auch jede Verstärkerschaltung mit einer umschaltbaren Verstärkung ausführbar.

Erfindungsgemäß sind die Verstärkungen der Verstärkerschaltungen wählbar. Auf diese Weise ist es ermöglicht die gesamte Steuerelektronik der verschiedenen Ausführungsbeispiele jeweils für verschiedene Leistungsklassen von Umrichtern zu verwenden, die entsprechend ihrer Leistungsklasse verschiedene Wechselrichterstufen mit Schaltern S aufweisen. Dabei sind die Schalter S für verschieden große maximal zulässige Ströme und/oder Leistungen ausgelegt.

Wenn also für verschiedene Leistungsklassen verschiedene Schalter verwendet werden und somit verschieden große Ströme auftreten, sind die Messverstärkungen entsprechend wählbar, so dass beispielsweise derselbe Shunt-Widerstand oder zumindest Shunt-Widerstandswert verwendbar ist. Auf diese Weise ist nur der Leistungsteil, umfassend Schalter des Wechselrichters, an die Leistungsklasse anzupassen.

Der Umrichter ist also mit einer Leiterplatte ausführbar, die die Messverstärkerschaltungen der Stromerfassungen umfasst. Diese Leiterplatte ist somit auch in mehrere Umrichter einbringbar, die sich in der Nennleistung unterscheiden und somit verschiedenartige Leistungsstufen mit entsprechenden Leistungsschaltern aufweisen. Eine große Varianz innerhalb einer Baureihe ist somit mit einer geringen Teilezahl herstellbar.

Mittels der weiter unten beschriebenen Offsetbestimmung und der ebenfalls weiter unten beschriebenen Bestimmung der Verstärkungen ist auch ein Umschalten während des laufenden Betriebs einfach und schnell ermöglicht. Denn wenn beispielsweise der zu erwartende Strommesswert klein ist, aber eine höher Auflösung des Strommesswertes eine bessere Regelgüte ergeben soll, ist auch während des Betriebs und Regelns des Motors ein Umschalten ausführbar, ohne dass ein Sprung im gemessenen Stromverlauf zu erwarten wäre, beispielsweise wegen verschieden großer Offsets, oder eine winkelabhängig variierende Verstärkung des erfassten Stromwertes, beispielsweise wegen verschieden starker Verstärkungen der zu den einzelnen gehörenden Stromerfassungen.

Aus den drei Strommesssignalen gemäß Figur 1 werden durch Analog-Digital-Wandlung Stromabtastwerte abgeleitet, aus denen Strommesswerte gebildet werden. Aus diesen Strommesswerten wird der Stromraumzeiger bestimmt, wobei die zu den Strommesswerten zugehörigen Halbbrücken abhängig vom Winkel des Spannungsraumzeigers ausgewählt werden. Da für die Motorströme nach der Kirchhoffschen Regel $I_R + I_S + I_T$ = 0 gilt, weist dieser Stromraumzeiger zwei Freiheitsgrade auf. Er weist also zwei unabhängige Parameter auf. Daher genügt es prinzipiell, dass zur Bestimmung des Stromraumzeigers nur zu zwei Zweigen zugeordnete Strommesswerte verwendet werden. Dabei ist allerdings zu beachten, dass Pulsweitenmodulationssignale des Umrichters innerhalb einer Pulsweitenmodulationsperiode nicht konstant sein müssen, also die Schaltzustände derart wechseln, dass sogar Schaltzustände zeitweise auftreten können, die für sich allein genommen gar keine Bestimmung des Stromraumzeigers erlauben würden!

Für das Regelverfahren des Umrichters ist es zur Erreichung einer hinreichenden Regelgüte ausreichend, einmal pro Pulsweitenmodulationsperiode einen Stromraumzeiger als Rechengröße zu bestimmen, der den über eine Pulsweitenmodulationsperiode gebildeten Mittelwert des physikalischen Stromraumzeigers repräsentiert.

Die von der Steuer- und Regelvorrichtung 1 generierten Pulsweitenmodulations-Signale $PWM_R(t)$, $PWM_S(t)$ und $PWM_T(t)$ bestimmen den Zustand der Leistungsschalter $S_{Ro}$, $S_{So}$, $S_{To}$, $S_{Ru}$, $S_{Su}$ und $S_{Tu}$. Die Pulsweitenmodulations-Signale sind folgendermaßen vorgesehen: Wenn das jeweilige Pulsweitenmodulations-Signal , beispielsweise $PWM_R(t)$, 1 beträgt, wird der zugehörige obere Leistungsschalter, also beispielhaft $S_{Ro}$, geschlossen und der zugehörige untere Leistungsschalter, also beispielhaft $S_{Ru}$, geöffnet. In diesem Fall beträgt das zugehörige Ausgangsspannungspotential $U_{Z+}$. Beträgt das Pulsweitenmodulations-Signal 0, ist also im LOW-Zustand, sind die zugehörigen Leistungsschalter in dem jeweils anderen Zustand und das zugehörige Ausgangsspannungspotential beträgt $U_{Z-}$. Die in der praktischen Realisierung eingefügte sogenannte Totzeit, während der der jeweils obere und untere Schalter offen ist, ist für die prinzipielle Funktion der Erfindung nicht relevant.

Wenn ein zu einer Halbbrücke gehörendes Pulsweitenmodulations-Signal sich im LOW-Zustand befindet, fließt der zugehörige Motorstrom im unteren Zweig der zugehörigen Halbbrücke und damit über den jeweiligen Shunt-Widerstand. Zur genauen Erfassung der Strommesswerte muss der Shunt-Widerstand länger als eine Mindestdauer vom zugehörigen Motorstrom durchflossen werden. Die Mindestdauer ist dabei abhängig von der Filterwirkung der Messverstärkerschaltungen, umfassend Verstärkerschaltungen $V_R$, $V_S$ und $V_T$. Eine Filterwirkung wird durch entsprechende Beschaltung erreicht, um Rauschanteile oder Störanteile bei den Strommesswerten zu unterdrücken. Beispielsweise ist bei einer Pulsweitenmodulationsfrequenz von 16 kHz eine Filterzeitkonstante aus dem Bereich von 0,5 μs bis 2 μs vorteilhaft.

Vorteiligerweise wird beim Ausführungsbeispiel ein sogenanntes symmetrisches Pulsweitenmodulationsverfahren verwendet. Bei solchen symmetrischen Pulsweitenmodulationsverfahren hat derjenige zeitliche Mittelwert, der aus dem Wert des Zeitpunktes eines ersten Schaltzustandswechsels des Pulsweitenmodulations-Signals in einer ersten Phase und dem Wert des Zeitpunktes des zeitlich nachfolgenden zugehörigen Schaltzustandswechsels in der selben Phase gebildet wird, den selben Wert wie die entsprechend gebildeten Mittelwerte der anderen beiden Phasen. Daher liegen also die Schaltzustandswechsel von HIGH auf LOW und zurück in allen drei Phasen symmetrisch zur Mitte der Pulsweitenmodulations-Periode.

Vorteiligerweise wird bei einem Ausführungsbeispiel die Amplitude des gemittelten Ausgangsspannungsraumzeigers auf $U_Z/\sqrt{3}$ begrenzt, so dass stets ein sinusförmiges Drehspannungssystem generierbar ist. Diese Begrenzung bezeichnet die maximale Aussteuerung. Eine Übersteuerung, also Verlassen dieses durch die Begrenzung definierten Arbeitsbereiches, wird stets vermieden.

Vorteiligerweise bezieht sich das Ausführungsbeispiel also nur auf solche Umrichter, die derart pulsweitenmoduliert betrieben werden, dass in keiner Pulsweitenmodulationsperiode eine derartig hohe Aussteuerung vorgenommen wird, dass nur ein einziger aktiver Schaltzustand für eine volle Pulsweitenmodulationsperiode auftritt. Bei einem solchen aktiven Schaltzustand nehmen die Pulsweitenmodulations-Signale $PWM_R(t)$, $PWM_S(t)$ und $PWM_T(t)$ die Werte (110), (101), (100), (001), (010) oder (011) an, die auch als diskrete aktive Ausgangsspannungsraumzeiger bezeichnet werden. Aktive Schaltzustände umfassen also nicht die Schaltzustände (111) und (000). Die beiden zuletzt genannten Schaltzustände werden jeweils auch als diskreter Nullspannungsraumzeiger oder Nullvektor bezeichnet.

Sogenannte Randvektoren sind diejenigen, über eine Pulsweitenmodulationsperiode gemittelten Ausgangsspannungsraumzeiger, welche beim theoretischen Anlegen eines einzigen der aktiven Schaltzustände über eine ganze Pulsweitenmodulationsperiode sich ergeben würden. Vorteiligerweise nimmt der über eine Pulsweitenmodulationsperiode gemittelte Ausgangsspannungsraumzeiger bei einem Ausführungsbeispiel nie den Wert eines solchen Randvektors an wegen der oben erwähnten Begrenzung des Arbeitsbereichs.

Im Bild der genannten IEEE - Schrift von Francesco Parasiliti nach der dortigen Figur 8 auf Seite 1287 gesprochen, bedeutet die oben beschriebene Begrenzung des über eine Pulsweitenmodulationsperiode gemittelten Ausgangsspannungsraumzeigers, dass dieser innerhalb des maximalen Innkreises des Hexagons liegt. Der gemittelte Ausgangsspannungsraumzeiger nimmt nie den Wert eines Randvektors an, kommt also bei dem Ausführungsbeispiel nie auf die Ecken des Hexagons zu liegen.

Da der Ausgangsspannungsraumzeiger begrenzt ist, wechseln sich verschiedene diskrete Schaltzustände ab. Durch geschickte Wahl der Zeitpunkte für die Messanstöße innerhalb einer Pulsweitenmodulationsperiode ist für jede Pulsweitenmodulationsperiode ein Stromraumzeiger bestimmbar. Die sich abwechselnden Zustände umfassen dabei unter Anderem sogar Zustände, bei denen die Bestimmung eines Stromraumzeigers nicht möglich wäre, wenn sie dauerhaft über eine Pulsweitenmodulationsperiode anliegen würden, wie beispielsweise auch den Zustand (101) entsprechend der letzten Zeile der Tabelle 2B aus der US 5 815 391. Insbesondere wird beispielsweise an einem ersten Zeitpunkt in einer ersten Phase ein Messanstoß ausgeführt, zu einem anderen zweiten Zeitpunkt in einer zweiten Phase ein zweiter Messanstoß und zu einem dritten Zeitpunkt in der ersten Phase ein dritter Messanstoß. Durch Mittelwertbildung des ersten und dritten Messwertes wird erreicht, dass der ermittelbare Stromraumzeiger nicht durch Stromripple verfälscht ist bei dem für das Ausführungsbeispiel zulässigen Pulsweitenmodulations-Verfahren, insbesondere symmetrischen Pulsweitenmodulations-Verfahren, bei denen der Ausgangsspannungsraumzeiger auf den Innkreis des Hexagons begrenzt ist. Somit ist also nur ein einziger Analog-Digital-Wandler notwendig, insbesondere ohne externe zusätzliche Sample-Hold-Schaltungen.

In der Figur 2 ist eine realisierbare Variante für einen Teil der Steuer- und Regelvorrichtung 1 aus Figur 1 gezeigt. Dieser umfasst eine Sample-Hold-Schaltung 21, der die drei Strommesssignale zugeführt werden, und einen Mikrocontroller 22 mit integriertem Analog-Digital-Wandler. Der Mikrocontroller 22 steuert über die Signale S/H1, S/H2 und S/H3 die Abtastzeitpunkte, die auch als Messanstöße bezeichnet werden, zu denen die Sample-Hold-Schaltung 21 Strommesssignale bis zur Analog-Digital-Wandlung fest hält. Der Mikrocontroller 22 muss dann nur einen einzigen Analog-Digital-Wandler zusammen mit einem Analog-Multiplexer oder Umschalter 23 umfassen. Vorteil ist dabei, dass mit nur einem einzigen Analog-Digital-Wandler eine gleichzeitige Erfassung von Stromabtastwerten erreicht ist, obwohl eine sequentielle Analog-Digital-Wandlung stattfindet. Im Mikrocontroller 22 werden dann aus den Stromabtastwerten Strommesswerte beziehungsweise ein Stromraumzeiger bestimmt. Der Mikrocontroller 22 steuert über die Signale S/H1, S/H2 und S/H3 die Sample-Hold-Schaltung und damit die Messanstöße entsprechend der weiter unten geschilderten Verfahren.

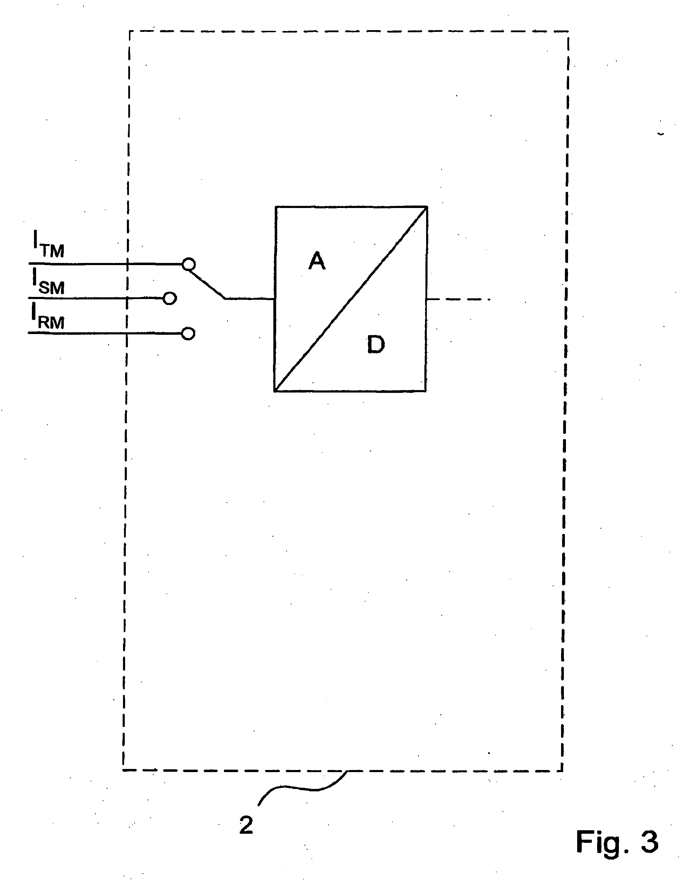

In einem anderen Ausführungsbeispiel ist gemäß Figur 3 im Unterschied zur Variante nach Figur 2 die Sample-Hold-Schaltung 21 einsparbar. Dabei ist es jedoch notwendig, die Stromabtastwerte nacheinander zu erfassen entsprechend der weiter unten geschilderten Verfahren.

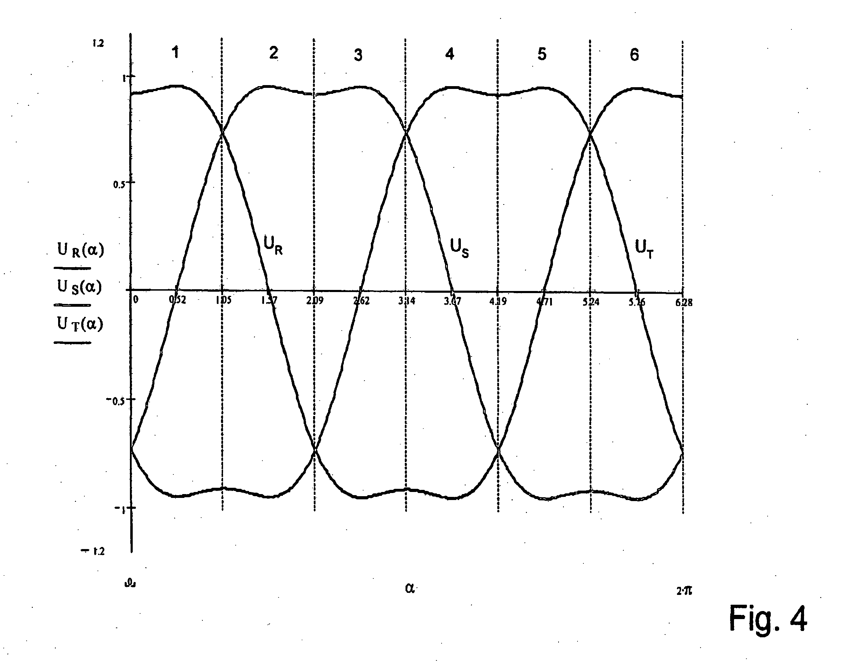

In der Figur 4 sind beispielhafte zeitliche Verläufe der über jeweils eine Pulsweitenmodulationsperiode gemittelten motorseitigen Ausgangspotentiale $U_R$, $U_S$ und $U_T$ des Umrichters über eine Ausgangsspannungsperiode gezeigt, wobei die motorseitigen Ausgangspotentiale $U_R$, $U_S$ und $U_T$ normiert eingezeichnet sind und der Ausgangsspannungswinkel $\alpha$ sich über den Bereich von 0 bis $2\pi$ erstreckt. Entsprechend der Normierung entspricht der Potentialwert $U_{Z-}$ dem Wert -1 und $U_{Z+}$ dem Wert +1.

In der Figur 4 ist zu erkennen, dass die Mittelwerte der Ausgangspotentiale eine dritte Oberschwingung enthalten.

Weiter sind in Figur 4 Winkelbereiche 1 bis 6 des Ausgangsspannungszeigers eingezeichnet, in denen verschiedene Mittel zur Stromerfassung verwendet werden.

Bei einem Ausgangsspannungswinkel von α = π/6 beträgt der Mittelwert des Ausgangspotentials $U_S$ Null. Der Mittelwert des Ausgangspotentials $U_R$ liegt in der Nähe des positiven maximalen Wertes 1. Der Mittelwert des Ausgangspotentials $U_T$ liegt in der Nähe des minimalen Wertes -1. Die Mittelwerte der Ausgangspotentiale erreichen bei diesem Ausgangsspannungswinkel und bei der beispielhaft gewählten Amplitude also fast die maximale Aussteuerung des Umrichters.

In der Figur 5 sind für die Ausgangspotentiale aus Figur 4 wieder beim Ausgangsspannungswinkel α = π / 6 zugehörige zeitliche Verläufe der Pulsweitenmodulations-Signale $PWM_R(t)$, $PWM_S(t)$ und $PWM_T(t)$ skizziert. Aus diesen werden die Ansteuersignale für die Leistungsschalter $S_{Ro}$, $S_{So}$, $S_{To}$,

$S_{Ru}$, $S_{Su}$ und $S_{Tu}$ abgeleitet. Wenn das jeweilige Pulsweitenmodulations-Signal , beispielsweise $PWM_R(t)$, 1 beträgt, wird der zugehörige obere Leistungsschalter, also beispielhaft $S_{Ro}$ , geschlossen und der zugehörige untere Leistungsschalter, also beispielhaft $S_{Ru}$, geöffnet. In diesem Fall beträgt das zugehörige Ausgangsspannungspotential $U_R = U_{Z+}$. Beträgt das Pulsweitenmodulations-Signal 0 gehen die zugehörigen Leistungsschalter in den jeweils anderen Zustand und das zugehörige Ausgangsspannungspotential beträgt $U_{Z-}$. Die in der praktischen Realisierung eingefügte sogenannte Totzeit, während der der jeweils obere und untere Schalter offen ist, ist für die Funktion des Ausführungsbeispiels prinzipiell nicht relevant. In der Figur 5 sind in Abszissenrichtung zwei Pulsweitenmodulationsperioden gezeigt.

Das über eine Pulsweitenmodulationsperiode gemittelte Ausgangsspannungspotential $U_S$ =0 wird gemäß Figur 5 durch ein $PWM_S(t)$- Signal erreicht, das zu 50% der Pulsweitenmodulationsperiode 1 ist und zu 50% der Pulsweitenmodulationsperiode 0 ist. Die Pulsweitenmodulations-Verhältnisse der anderen Pulsweitenmodulations-Signale $PWM_R(t)$ und $PWM_T(t)$ sind entsprechend deren über eine Pulsweitenmodulationsperiode gemitteltes Ausgangsspannungspotential verteilt.

In der Figur 6 sind die zu den beiden genannten Pulsweitenmodulationsperioden zugehörigen beispielhaften Motorströme $I_R(t)$, $I_s(t)$ und $I_T(t)$ in den Ausgangszweigen gezeigt. Außerdem ist die aufgrund der pulsweitenmodulierten Ausgangspotentiale resultierende Stromwelligkeit angedeutet.

In der Figur 7 ist der zu den beiden genannten Pulsweitenmodulationsperioden zugehörige idealisierte zeitliche Verlauf der Strommesssignale $I_{RM}(t)$, $I_{SM}(t)$ und $I_{TM}(t)$ gezeigt ohne die filternde Wirkung der Verstärkerschaltungen $V_R$, $V_S$ und $V_T$. Ein von Null abweichender Stromabtastwert ergibt sich immer nur zu denjenigen Zeitabschnitten, bei denen das Pulsweitenmodulations-Signal der zugehörigen Halbbrücke Null ist; d.h., der untere Schalter geschlossen ist. Ist der obere Schalter geschlossen, fließt nämlich der Motorstrom nicht über den Shunt-Widerstand der Halbbrücke, so dass während dieser Zeit der Strommesssignal unabhängig vom tatsächlichen Strom Null ist. Die Strommesssignale repräsentieren also nicht kontinuierlich die Motorströme sondern sie repräsentieren diese lediglich in denjenigen Zeitabschnitten, in welchen die Pulsweitenmodulations-Signalen $PWM_R(t)$, $PWM_S(t)$ und $PWM_T(t)$ Null sind. Bei dem gezeigten Verlauf ist das Strommesssignal $I_{RM}(t)$ nur während eines sehr kurzen Zeitabschnittes von Null verschieden. Bei Vollaussteuerung der Ausgangsspannung würde dieser Zeitabschnitt sogar gänzlich verschwinden. Aus Figur 7 ist daher ersichtlich, dass das Bestimmen eines Stromraumzeigers bei solchen Betriebszuständen versagt, wenn der Stromraumzeiger unter Verwendung von Strommesssignalen gebildet wird, die nur so kurzzeitig von Null verschieden sind, wie in Figur 7 beispielhaft $I_{RM}(t)$, dass sie durch die Filterwirkung zum Zeitpunkt der Erfassung, also beim Messanstoß, nennenswert verfälscht werden. Eine Mindestfilterwirkung ist aber notwendig, um Messrauschen und Störsignale zu unterdrücken.

Daher wird bei einem Ausführungsbeispiel für jede Pulsweitenmodulationsperiode dasjenige "optimale" Paar, das die jeweils breiteren Pulsweitenmodulations-Signale aufweist, aus den drei Halbbrücken ausgewählt, d.h. es werden nur Strommesssignale dieser beiden speziellen Halbbrücken verwendet. Das Auswählen erfolgt derart, dass dasjenige Strommesssignal nicht verwendet wird, dessen unterer Schalter innerhalb einer jeweiligen Pulsweitenmodulationsperiode eine kürzere Zeit den geschlossenen Zustand aufweist als die beiden anderen unteren Schalter.

In der Figur 7 ist ein Betriebszustand für zwei Pulsweitenmodulationsperioden gezeigt, bei dem das ausgewählte Paar $I_{SM}(t)$ und $I_{TM}(t)$ ist. Für diese sind auch die Zeitpunkte, zu denen die Stromabtastwerte erfasst werden und die auch als Messanstöße bezeichnet werden, durch gezackte Pfeile angedeutet.

Dabei sind zwei Grundtypen von Verfahren verwendbar.

Für ein erstes Verfahren sind die Messanstöße mit durchgezogen, nicht gestrichelt gezeichneten gezackten Pfeilen eingezeichnet. Dabei werden die Stromabtastwerte beim ausgewählten Paar $I_{SM}(t)$ und $I_{TM}(t)$ gleichzeitig erfasst. Hierbei sind verschiedene Ausführungen vorsehbar. Bei einer ersten Ausführung wird jeder Stromabtastwert durch einen separaten Analog-Digital-Wandler gebildet. Bei einer zweiten Ausführung werden die drei Strommesssignale gemäß Figur 2 jeweils einem Sample-Hold-Verstärker der Sample-Hold-Schaltung 21 zugeführt, wobei die Sample-Hold-Verstärker zum Zeitpunkt der Abtastung in den Hold-Zustand wechseln. Somit kann der Analog-Digital-Wandler mittels des Multiplexers oder Umschalters die fest gehaltenen Strommesssignale nacheinander wandeln. Bei einer dritten Ausführung werden zwei Analog-Digital-Wandler und entsprechende Umschalter verwendet. Bei weiteren Ausführungen sind auch Mischformen ausführbar.

Beim ersten Verfahren wird vorteiligerweise ein symmetrisches Pulsweitenmodulations-Verfahren verwendet, wobei die Schaltfrequenz nicht höher als 20kHz gewählt ist und die oben beschriebene, maximale Aussteuerung nicht überschritten wird. Somit ist stets innerhalb einer Pulsweitenmodulations-Periode ein Pulsmuster vorhanden, bei dem in maximal einem Ausgangszweig ein solches Pulsweitenmodulations-Signal auftritt, dessen LOW-Zustand kürzer als die Mindestdauer währt. D.h., dass niemals in zwei Phasen gleichzeitig für weniger als die Mindestdauer beide Pulsweitenmodulations-Signale im LOW-Zustand sind. Für den Fall, dass der LOW-Zustand eines der Pulsweitenmodulations-Signale, beispielsweise $PWM_R(t)$, die Mindestdauer unterschreitet, ist trotzdem sicher gestellt, dass der Stromraumzeiger korrekt bestimmt wird. Denn die beiden anderen Pulsweitenmodulations-Signale, im Beispiel also $PWM_S(t)$ und $PWM_T(t)$, unterschreiten die Mindestdauer nicht. Somit ist bei einem Ausführungsbeispiel immer ein korrektes Bestimmen des Stromraumzeigers gewährleistet, sofern bei der jeweiligen Art der Pulsweitenmodulations-Verfahren sicher gestellt ist, dass immer nur maximal ein Pulsweitenmodulations-Signal kürzer als die Mindestdauer im LOW-Zustand verweilt.

Bei einem zweiten Verfahren ist der in der Mitte der Pulsweitenmodulationsperiode liegende Messanstoß für $I_{TM}$ des ersten Verfahrens durch zwei Messanstöße ersetzt, die jeweils einen Zeitversatz $\Delta t$ aufweisen. Zuerst erfolgt dabei in sequentieller Weise der erste Messanstoß für $I_{TM}$, danach der für $I_{SM}$ und dann der zweite Messanstoß für $I_{TM}$. Vorteilhaft ist dabei, den Messanstoß für $I_{SM}$ in die Mitte der Pulsweitenmodulationsperiode zu legen. Der Zeitversatz $\Delta t$ ist möglichst klein, aber größer als die Analog-Digital-Wandler-Zeit zu wählen. Aus dem ersten und zweiten Stromabtastwert für $I_{TM}$ wird der Mittelwert gebildet und zur Bestimmung des Stromraumzeigers verwendet. Dieser so gebildete Mittelwert entspricht demjenigen fiktiven Stromabtastwert für $I_{Tm}$, der gleichzeitig zur Erfassung des Stromabtastwertes $I_{SM}$ erfassbar wäre. Damit ist der auf diese Weise bestimmte Stromraumzeiger frei vom Einfluss des Stromripple. Denn bei der Verwendung von symmetrischen Pulsweitenmodulationsverfahren weist auch der Stromripple einen zur Mitte der Pulsweitenmodulationsperiode punktsymmetrischen Verlauf zur jeweiligen Strom-Funktionswert bei t=0.5 auf, wie auch in Figur 6 beispielhaft erkennbar ist. In Figur 6 liegt die Mitte der ersten Pulsweitenmodulationsperiode bei t=0.5 und der zweiten Pulsweitenmodulationsperiode bei t=1.5. Da also die beiden Stromabtastwerte $I_{TM}$ ( t = 0.5 - $\Delta t$) und $I_{TM}$ (t = 0.5 + $\Delta t$) punktsymmetrisch zum Strom-Funktionswert $I_{TM}$ ( t = 0.5 ) sind, gleicht der Mittelwert der beiden Stromabtastwerte $I_{TM}$ ( t = 0.5 - $\Delta t$) und $I_{TM}$ ( t = 0.5 + $\Delta t$) dem Strom-Funktionswert $I_{TM}$ ( t = 0.5 ).

Auf diese Weise ist es ermöglicht, mit nur einem einzigen Analog-Digital-Wandler den Stromraumzeiger ohne Verfälschung durch Stromripple zu bestimmen. Da nämlich alle Stromabtastungen sequentiell ausführbar sind, sind zudem zusätzliche Sample-Hold-Schaltungen verzichtbar. Unter zusätzlichen Sample-Hold-Schaltungen sind nicht diejenigen Sample-Hold-Schaltungen zu verstehen, die fester Bestandteil bei gebräuchlichen Analog-Digital-Wandlern sind.

Auch beim zweiten Verfahren wird vorteiligerweise ein symmetrisches Pulsweitenmodulations-Verfahren verwendet, wobei die Schaltfrequenz vorteiligerweise nicht höher als 20kHz gewählt ist und die oben beschriebene, maximale Aussteuerung nicht überschritten wird. Somit ist wiederum stets innerhalb einer Pulsweitenmodulations-Periode ein Pulsmuster vorhanden, bei dem in maximal einem Ausgangszweig ein solches Pulsweitenmodulations-Signal auftritt, dessen LOW-Zustand kürzer als die Mindestdauer währt. Bei dem beim zweiten Verfahren verwendeten Pulsweitenmodulations-Verfahren ist stets mindestens ein Pulsweitenmodulations-Signal vorhanden, dessen LOW-Zustand länger als die Summe aus Mindestdauer und dem doppelten Zeitversatz, also 2*$\Delta t$, währt. Somit ist bei einem Ausführungsbeispiel immer ein korrektes Bestimmen des Stromraumzeigers gewährleistet, sofern bei der jeweiligen Art der Pulsweitenmodulations-Verfahren sicher gestellt ist, dass die Pulsweitenmodulations-Signale eine ausreichende Pulsbreite aufweisen. Flat-Top-Verfahren sind zwar symmetrische Pulsweitenmodulations-Verfahren im Allgemeinen aber nicht vorteilig bei kleinen Ausgangsspannungen verwendbar.

Im Ausführungsbeispiel nach Figur 7 werden darüber hinaus in denjenigen Zeitabschnitten, in welchen ein verschwindender Stromabtastwert zu erwarten ist, ein oder mehrere Stromabtastwerte erfasst. Beispielhaft ist in Figur 7 gezeigt, dass für die Phase R der Messwert $I_{RMoff}$ an zwei Zeitpunkten erfasst wird, wobei hierbei der Mittelwert der beiden erfassten Messwerte verwendet wird, und für die Phase S der Messwert $I_{SMoff}$. In der Phase T ist der Zeitbereich für ein störungsfreies Erfassen eines Strommesswertes zu kurz und es wird daher kein Strom in den Zeitabschnitten erfasst, in welchen ein verschwindender Stromabtastwert zu erwarten ist.

Wenn sich in nachfolgenden Pulsweitenmodulationsperioden die in den einzelnen Phasen zu erzeugenden Spannungswerte ändern und somit in der Phase T ein längerer Zeitabschnitt für erwartenden verschwindenden Strom, wird auch in der Phase T ein Stromabtastwert erfasst. Insbesondere bei einem zu erzeugenden Drehfeld verteilt sich also die Stromerfassung gleichmäßig über die Drei Phasen.

Auf diese Weise ist der Offset der einzelnen Messverstärker der Sample-Hold-Schaltung bestimmbar. Bei der Stromerfassung wird dieser berücksichtigt, indem der jeweils aktuelle Offset-Wert vom erfassten Messwert subtrahiert wird. Es ergibt sich somit ein verbesserter Messwert und damit auch eine entsprechend verbesserte Regelung des Motors. Vorteiligerweise ist diese Offset-Bestimmung online ermöglicht, also während des ablaufenden Betriebs der Regelung. Es werden dabei nur zusätzliche Erfassungen des Stromes ausgeführt, die keine wesentliche zusätzliche Belastung der Steuereinheit oder eine Verlangsamung des Steuer- und Regelverfahrens verursachen. Weiterer Vorteil ist auch, dass durch Temperaturanstieg verursachte Drift des Offsets bestimmbar wird und entsprechend gegengewirkt werden kann.

Der Zeitpunkt des Stromabtastens hat mindestens 6 μs, vorzugsweise mindestens 8μs, Abstand von demjenigen vorausgehenden Zeitabschnitt, in welchem der zugehörige Brückenzweig eingeschaltet war. Auf diese Weise ist sichergestellt, dass Schwingvorgänge beendet sind und der Strom sicher abgeklungen ist.

In einem weiteren erfindungsgemäßen Ausführungsbeispiel wird statt der beiden Messungen in der Phase R nur ein einzelner Messwert erfasst, der nicht gleichzeitig mit dem Messwert der Phase S erfasst wird.

In Weiterbildung wird als aktuell erfasster Offset-Wert ein gleitender Mittelwert einiger zuletzt erfassten Messwerte verwendet.

Vorzugsweise werden die Messwerte symmetrisch um den ersten Abtastzeitpunkt herum erfasst.

Bei dem Ausführungsbeispiel werden nur solche Pulsweitenmodulations-Verfahren verwendet, die in der Mitte Pulsweitenmodulations-Periode einen Schaltzustand derart aufweisen, dass mindestens zwei untere Schalter geschlossen sind.

In einem weiteren Ausführungsbeispiel werden die Stromabtastwerte nicht in derselben Pulsweitenmodulationsperiode bestimmt, sondern es wird der erste Stromabtastwert in einer ersten Pulsweitenmodulationsperiode erfasst und der zweite Stromabtastwert in einer der darauf folgenden Pulsweitenmodulationsperioden. Dabei ist wiederum nur ein einziger Analog-Digital-Wandler ohne zusätzliche Sample-Hold-Schaltung vorsehbar. Dies ist besonders vorteilhaft bei hoher Schaltfrequenz und somit also kurzen Pulsweitenmodulationsperioden. Dabei tritt keine Verfälschung durch Stromripple auf. Nur die in dieser Zeit vorkommende Änderung des Winkels des Stromraumzeigers kann Ursache für Verfälschungen werden. Die Auswahl des Paares erfolgt dabei gemäß Figur 8.

In Figur 4 sind Winkelbereiche 1 bis 6 eingezeichnet, die verschiedenen Winkelbereichen des Ausgangsspannungszeigers entsprechen. In der Figur 8 ist für jeden dieser Winkelbereiche das zu verwendende Paar durch gezackte Pfeile angegeben. Beispielsweise ist im Winkelbereich 1 nur S und T, also $I_{SM}$ und $I_{TM}$, zu verwenden. Im Winkelbereich 2 ist nur R und T, also $I_{RM}$ und $I_{TM}$, zu verwenden. In denjenigen Winkelbereichen, in welchen in einer jeweiligen Phase keine Stromerfassung ausgeführt ist, ist die Erfassung des Offsetwertes vorgesehen. Dies ist in Figur 8 mit dem Eintrag $I_{RMoff}$, $I_{SMoff}$ und $I_{TMoff}$ bezeichnet.

Jedem einer jeweiligen Phase R,S,T zugeordneten Brückenzweig ist gemäß Figur 1 und 2 ist ein jeweiliges Mittel zur Stromerfassung zugeordnet. Dieses umfasst, wie in den Figuren angedeutet, einen jeweiligen Messverstärker. Erfindungsgemäß wird zu Beginn oder in einem anderen Zeitabschnitt die Messverstärkung der drei den drei Phasen zugeordneten Mittel bestimmt und/oder zumindest zueinander angeglichen.

Hierzu wird in einem ersten Schritt ein erster der drei Brückenzweige ausgeschaltet und die beiden anderen derart bestromt, dass im einer zweiten Phase zugeordneten Brückenzweig betragsmäßig derselbe Strom fließt wie in der der dritten zugeordneten Phase. Danach wird in beiden Phasen ein Stromabtastwert erfasst.

Vorzugsweise wird in einem zweiten Schritt danach die angelegte Spannung umgepolt, also die Stromrichtung invertiert, wobei derart dieselbe Zeitdauer der Bestromung wie beim ersten Schritt vorgesehen ist, dass die zugehörige Strom-Zeit-Fläche beim ersten und zweiten Schritt im Wesentlichen gleich groß ist. Auf diese Weise wird eine etwaige drehmomenterzeugende Wirkung zumindest im zeitlichen Mittel verhindert. Nach Einschwingen des Stromes im zweiten Zeitschritt werden wiederum entsprechende Stromabtastwerte für beide Phasen erfasst.

Der erste und zweite Schritt wird wiederholt, wobei die den Phasen zugeordneten Mittel zyklisch getauscht werden.

Auf diese Weise werden die drei Verstärkungen der den drei Phasen zugeordneten Stromerfassungen, umfassend jeweilige Messverstärker, bestimmt. Vorzugsweise geht dieser Bestimmung eine Bestimmung des Offsetwertes mittels Erfassung eines Stromabtastwerts bei jeweils ausgeschalteten Brückenzweigen voran.

Nach Bestimmung der drei Messverstärkungen ist die Stromerfassung in allen drei Phasen normiert ausführbar, also der Stromabtastwert durch die Messverstärkung dividiert verwendbar für das Regelverfahren des Umrichters. Ein betragsmäßig konstanter, aber seinen Winkel verändernder Stromraumzeiger wird also auch als betragsmäßig konstanter Strom erfasst und die Regelung erreicht verbesserte Regeleigenschaften, insbesondere eine höhere Regelgüte. Insbesondere das aus diesen Strommesswerten bestimmte Drehmoment ist genauer und realitätsnäher bestimmt.

Außerdem ist bei in zeitlichen Abständen wiederholt ausgeführten Bestimmungen der Messverstärkungen eine Drift der Messverstärkungen kompensierbar und berücksichtigbar.

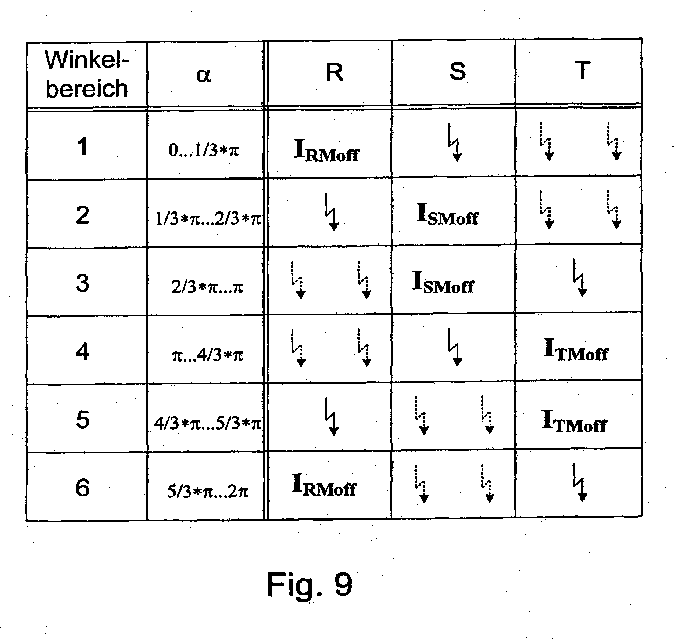

Wie oben beschrieben, wird bei dem zweiten Verfahren der symmetrisch in der Mitte der Pulsweitenmodulationsperiode liegende Messanstoß für einen Stromabtastwert des ersten Verfahrens durch zwei Messanstöße ersetzt, die jeweils einen Zeitversatz Δt aufweisen. Figur 9 zeigt, wie in Abhängigkeit von den Winkelbereichen des Ausgangsspannungsraumzeigers die Messanstöße durchzuführen sind. Es ist insbesondere dargestellt, in welcher Halbbrücke zwei Messanstöße und in welcher Halbbrücke der einzelne mittig liegende Messanstoß durchzuführen sind. Im Winkelbereich 1 erfolgt also ein erster Messanstoß für $I_{TM}$, danach ein einzelner, mittig liegender Messanstoß für $I_{SM}$ und zuletzt ein zweiter Messanstoß für $I_{TM}$. Die Messanstöße weisen dabei einen zeitlichen Abstand von $\Delta t$ auf.

Im Winkelbereich 3 erfolgt also ein erster Messanstoß für $I_{RM}$, danach ein einzelner, mittig liegender Messanstoß für $I_{TM}$ und zuletzt ein zweiter Messanstoß für $I_{RM}$.

Für jeden Winkelbereich gibt es also eine Phase mit einem durchgezogen gezeichneten Blitz, was eine in der Mitte liegende Stromabtastung in dieser Phase bedeutet, und eine andere Phase mit zwei gestrichelt gezeichneten Blitzen, was eine doppelte Stromabtastung in dieser Phase bedeutet und zwar um den Zeitversatz $\Delta t$ vor- und nach der Mitte. Es werden bei einem Ausführungsbeispiel nur solche Pulsweitenmodulationsverfahren verwendet, deren Pulsmuster stets derart beschaffen ist, dass die unteren Schalter im jeweiligen Winkelbereich der mit Blitzen gekennzeichneten Phasen geschlossen sind in einem Zeitbereich um die jeweiligen Stromabtastungen herum. Bei der Phase mit zwei gestrichelt gezeichneten Blitzen ist der zugehörige untere Schalter von vor dem ersten Messanstoß bis nach dem zweiten Messanstoß geschlossen.

Kennzeichen der verwendbaren Pulsweitenmodulations-Verfahren ist, dass zumindest im Zeitpunkt der Mitte der Pulsweitenmodulations-Periode stets zwei untere Schalter geschlossen sind, wobei derjenige von diesen beiden unteren Schaltern, der zu der Phase mit der doppelten Stromabtastung zugeordnet ist, sogar mindestens eine Zeitspanne $2\Delta t$ geschlossen bleibt.

Wiederum ist in denjenigen Winkelbereichen, in welchen in einer jeweiligen Phase keine Stromerfassung ausgeführt ist, die Erfassung des Offsetwertes vorgesehen. Dies ist in Figur 9 mit dem Eintrag $I_{RMoff}$, $I_{SMoff}$ und $I_{TMoff}$ gekennzeichnet. Somit sind die ansonsten ungenutzten Bereiche ausgenutzt für die Bestimmung des Offsetwertes der Stromerfassung, also der gesamten Mittel hierzu, wie Messverstärker, Multiplexer und Analog/Digital-Wandler.

Bei anderen Ausführungsbeispielen werden gemäß Figur 7 die beiden Stromabtastwerte des Strommesssignals $I_{TM}$ nicht symmetrisch um den Messanstoß zur Erfassung des stromabtastwertes des Strommesssignals $I_{SM}$ herum erfasst, also nicht mit Zeitabstand $\Delta t$ vor und hinter der Erfassung von $I_{SM}$, sondern mit unterschiedlichen Zeitabständen. Dann wird statt des Mittelwertes ein interpolierter Wert gebildet, der die entsprechenden Zeitabstände berücksichtigt, wobei allerdings den Motor kennzeichnende Größen und auch die Art und Dauer der Schaltzustände beim Interpolieren zu berücksichtigen sind.

Bei anderen Ausführungsbeispielen werden statt der erwähnten zwei Stromabtastwerte mehr Stromabtastwerte erfasst. Darüber hinaus ist grundsätzlich jeder Stromabtastwert durch mehrere Stromabtastwerte ersetzbar. Somit ist eine weitere Verringerung von Messrauschen vorsehbar.

Bei weiteren Ausführungsbeispielen wird das Zeitverhalten der Verstärkerschaltungen $V_R$, $V_S$ und $V_T$ berücksichtigt, indem alle Messanstöße um die Filter-Zeitkonstante der Verstärkerschaltungen verzögert stattfinden. Die Filterzeitkonstante ist dabei kleiner als die halbe Mindestdauer.

Das Verfahren funktioniert auch bei höheren Pulsweitenmodulations-Frequenz als 20 kHz.

**Patentansprüche**

1.  Verfahren zur Bestimmung eines Stromraumzeigers,
    insbesondere zur Verwendung in einem Steuer- und/oder Regelverfahren,
    für einen pulsweitenmoduliert betriebenen Umrichter, umfassend eine Signalelektronik, eine Leistungsendstufe mit in drei, jeweils einen unteren und einen oberen Zweig aufweisenden Halbbrücken angeordneten Leistungsschaltern sowie in den drei oberen oder unteren Zweigen der Halbbrücken angeordnete Mittel zur Abtastung der jeweiligen Ströme,
    **dadurch gekennzeichnet, dass**
    die Mittel zur Abtastung mit wahlweise verschiedener Verstärkung betrieben werden.

2.  Verfahren nach Anspruch 1,
    **dadurch gekennzeichnet, dass**
    die Mittel jeweils eine Verstärkerschaltung umfassen, deren jeweilige Verstärkung auf verschiedene Werte wahlweise bringbar ist.

3.  Verfahren nach Anspruch 1 oder 2,
    **dadurch gekennzeichnet, dass**
    die Mittel jeweils zwei, wahlweise betreibbare Verstärkerschaltungen umfassen, deren jeweilige Verstärkung verschieden ist.

4.  Verfahren nach mindestens einem der vorangegangenen Ansprüche,
    **dadurch gekennzeichnet, dass**
    die Verstärkung während des laufenden Steuer- und Regelverfahrens umgeschaltet wird, insbesondere zur Erreichung einer besseren Auflösung bei der Stromerfassung.

5.  Verfahren nach mindestens einem der vorangegangenen Ansprüche,
    **dadurch gekennzeichnet, dass**
    dieselben Mittel zur Abtastung bei verschiedenen Leistungsschaltern verwendet werden, wobei einer der Schalter für einen größeren maximal zulässigen zu schaltenden Strom verwendbar ist als ein anderer.

6.  Verfahren nach mindestens einem der vorangegangenen Ansprüche,
**dadurch gekennzeichnet, dass**
nach geänderter Verstärkung der einer jeweiligen Phase zugeordneten Stromerfassungen zunächst der Offset und/oder die Verstärkung der der jeweiligen Phase zugeordneten Stromerfassung bestimmt und danach berücksichtigt wird,
insbesondere wobei zur Bestimmung der Verstärkung im jeweiligen Brückenzweig ein Strom eingeprägt und bestimmt wird.

7. Verfahren nach mindestens einem der vorangegangenen Ansprüche,
**dadurch gekennzeichnet, dass**
zur Bestimmung der Messverstärkungen in jeder Phase ein gleichgroßer Strom eingeprägt und dann bestimmt wird und daraus die zur jeweiligen Phase zugehörige Messverstärkung bestimmt wird.

8. Verfahren nach mindestens einem der vorangegangenen Ansprüche,
**dadurch gekennzeichnet, dass**
zur Offsetbestimmung der einer jeweiligen Phase zugeordneten Stromerfassung der Strom in einem ausgeschalteten Brückenzweig erfasst wird, insbesondere vor der Bestimmung der jeweiligen Messverstärkung.

9. Umrichter, insbesondere pulsweitenmoduliert betriebener Umrichter,
**dadurch gekennzeichnet, dass**
der Umrichter eine Signalelektronik, eine Leistungsendstufe mit in drei, jeweils einen unteren und einen oberen Zweig aufweisende Halbbrücken angeordneten Leistungsschaltern sowie in den drei oberen oder unteren Zweigen der Halbbrücken angeordnete Mittel zur Abtastung der jeweiligen Ströme umfasst, wobei die Mittel zur Abtastung abhängig vom Zustand eines Wahlmittels mit verschiedener Verstärkung betreibbar sind.

10. Umrichter nach mindestens einem der vorangegangenen Ansprüche,
**dadurch gekennzeichnet, dass**
jedes Mittel mindestens zwei Verstärkerschaltungen umfasst, wobei nur jeweils eines betrieben wird.

11. Umrichter nach mindestens einem der vorangegangenen Ansprüche,
**dadurch gekennzeichnet, dass**

- das Wahlmittel als Wahlschalter oder als ein anderes in Hardware realisiertes Mittel ausgeführt ist oder
- das Wahlmittel als Parameterwert oder anderes in Software realisiertes Mittel ausgeführt ist.

**Claims**

1. Method for determining a current space vector, in particular for use in a control method and/or regulating method,
for a converter operated in a pulse-width modulated manner, comprising signal electronics, a power output stage having power switches arranged in three half-bridges having respectively one lower and one upper branch, and means for sampling the respective currents arranged in the three upper or lower branches of the half-bridges,
**characterised in that**
the means for sampling are operated at selectively different amplification.

2. Method according to claim 1,
**characterised in that**
the means respectively comprise an amplifier circuit, the respective amplification of which is selectively adjustable to different values.

3. Method according to claim 1 or 2,
**characterised in that**
the means respectively comprise two selectively operable amplifier circuits, the respective amplification of which is different.

4. Method according to at least one of the preceding claims,
**characterised in that**
the amplification is switched over while the control method and regulating method is running, in particular to achieve a better resolution in the current detection.

5. Method according to at least one of the preceding claims,
**characterised in that**
the same means for sampling are used in different power switches, one of the switches being usable for a greater maximally admissible current to be switched than another.

6. Method according to at least one of the preceding claims,
**characterised in that**,
after modifying the amplification of the current detections associated with a respective phase, firstly the offset and/or the amplification of the current detection associated with the respective phase is determined and subsequently taken into account,
in particular a current being applied and determined in order to determine the amplification in the respective bridge branch.

7. Method according to at least one of the preceding claims,

**characterised in that**,
in order to determine the measuring amplifications, a current of identical magnitude is applied to each phase and then determined, and from this the measuring amplification associated with the respective phase is determined.

8. Method according to at least one of the preceding claims,
**characterised in that**,
in order to determine the offset of the current detection associated with a respective phase, the current is detected in a switched-off bridge branch, in particular prior to determining the respective measuring amplification.

9. Converter, in particular converter operated in a pulse-width modulated manner,
**characterised in that**
the converter comprises signal electronics, a power output stage having power switches arranged in three half-bridges having respectively one lower and one upper branch, and means for sampling the respective currents arranged in the three upper or lower branches of the half-bridges,
the means for sampling being operable at different amplification as a function of the state of a selection means.

10. Converter according to at least one of the preceding claims,
**characterised in that**
each means comprises at least two amplifier circuits, only one being operated at a time.

11. Converter according to at least one of the preceding claims,
**characterised in that**

- the selection means is formed as a selector switch or another means implemented in hardware, or
- the selection means is formed as a parameter value or another means implemented in software.

**Revendications**

1. Procédé de détermination d'un vecteur spatial de courant,
destiné à être utilisé en particulier dans un procédé de commande et/ou de régulation,
pour un variateur fonctionnant par modulation de largeur d'impulsions, comprenant une électronique de signalisation, un étage final de puissance avec des commutateurs de puissance disposés dans trois demi-ponts présentant chacun une branche inférieure et une branche supérieure ainsi que des moyens de détection des courants respectifs disposés dans les trois branches supérieures ou inférieures des demi-ponts,
**caractérisé en ce que**
les moyens de détection fonctionnent avec un gain différent au choix.

2. Procédé selon la revendication 1,
**caractérisé en ce que**
les moyens comprennent chaque fois un circuit amplificateur dont le gain respectif peut être réglé à différentes valeurs au choix.

3. Procédé selon la revendication 1 or 2,
**caractérisé en ce que**
les moyens comprennent chaque fois deux circuits amplificateurs pouvant fonctionner au choix, dont les gains respectifs sont différents.

4. Procédé selon au moins l'une des revendications précédentes,
**caractérisé en ce que**
le gain est commuté pendant l'exécution du procédé de commande et de régulation, en particulier pour atteindre une meilleure résolution dans la détection de courant.

5. Procédé selon au moins l'une des revendications précédentes,
**caractérisé en ce que**
les mêmes moyens de détection sont utilisés pour différents commutateurs de puissance, un des commutateurs étant utilisable pour un plus grand courant maximum admissible à commuter qu'un autre.

6. Procédé selon au moins l'une des revendications précédentes,
**caractérisé en ce que**
après modification du gain des détections de courant associées à une phase respective, l'offset et/ou le gain de la détection de courant associée à la phase respective est d'abord déterminé et ensuite pris en compte,
en particulier un courant étant appliqué et déterminé afin de déterminer le gain dans la branche de pont respective.

7. Procédé selon au moins l'une des revendications précédentes,
**caractérisé en ce que**
pour déterminer les gains de mesure, un courant de même grandeur est appliqué et ensuite déterminé dans chaque phase, et le gain de mesure associé à la phase respective est déterminé à partir de cela.

8. Procédé selon au moins l'une des revendications précédentes,

**caractérisé en ce que**
pour déterminer l'offset de la détection de courant associée à une phase respective, le courant dans une branche de pont déconnectée est détecté, en particulier avant la détermination du gain de mesure respectif.

9. Variateur, en particulier variateur fonctionnant par modulation de largeur d'impulsions,
**caractérisé en ce que**
le variateur comprend une électronique de signalisation, un étage final de puissance avec des commutateurs de puissance disposés dans trois demi-ponts présentant chacun une branche inférieure et une branche supérieure ainsi que des moyens de détection des courants respectifs disposés dans les trois branches supérieures ou inférieures des demi-ponts,
les moyens de détection pouvant fonctionner avec un gain différent en fonction de l'état d'un moyen de sélection.

10. Variateur selon au moins l'une des revendications précédentes,
**caractérisé en ce que**
chaque moyen comprend au moins deux circuits amplificateurs dont un seul fonctionne à chaque fois.

11. Variateur selon au moins l'une des revendications précédentes,
**caractérisé en ce que**

- le moyen de sélection est réalisé sous la forme d'un commutateur de sélection ou d'un autre moyen réalisé par matériel,
- le moyen de sélection est réalisé sous la forme d'une valeur de paramètre ou d'un autre moyen réalisé par logiciel.

Fig. 1

EP 2 269 295 B1

Fig. 2

EP 2 269 295 B1

$I_{TM}$

$I_{SM}$

$I_{RM}$

A

D

2

Fig. 3

Fig. 4

Fig. 5

Fig. 6

EP 2 269 295 B1

Fig. 7

| Winkel-bereich | α | R | S | T |
|---|---|---|---|---|
| 1 | $0...1/3*\pi$ | $I_{Rmoff}$ | ↓ | ↓ |
| 2 | $1/3*\pi...2/3*\pi$ | ↓ | $I_{Smoff}$ | ↓ |
| 3 | $2/3*\pi...\pi$ | ↓ | $I_{Smoff}$ | ↓ |
| 4 | $\pi...4/3*\pi$ | ↓ | ↓ | $I_{Tmoff}$ |
| 5 | $4/3*\pi...5/3*\pi$ | ↓ | ↓ | $I_{Tmoff}$ |
| 6 | $5/3*\pi...2\pi$ | $I_{Rmoff}$ | ↓ | ↓ |

Fig. 8

| Winkel-bereich | α | R | S | T |
|---|---|---|---|---|
| 1 | $0...1/3*\pi$ | $\mathbf{I_{RMoff}}$ | ↓ | ↓ ↓ |
| 2 | $1/3*\pi...2/3*\pi$ | ↓ | $\mathbf{I_{SMoff}}$ | ↓ ↓ |
| 3 | $2/3*\pi...\pi$ | ↓ ↓ | $\mathbf{I_{SMoff}}$ | ↓ |
| 4 | $\pi...4/3*\pi$ | ↓ ↓ | ↓ | $\mathbf{I_{TMoff}}$ |
| 5 | $4/3*\pi...5/3*\pi$ | ↓ | ↓ ↓ | $\mathbf{I_{TMoff}}$ |
| 6 | $5/3*\pi...2\pi$ | $\mathbf{I_{RMoff}}$ | ↓ ↓ | ↓ |

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19681189 T1
- US 5815391 A
- WO 03041258 A

**In der Beschreibung aufgeführte Nicht-Patentliteratur**

- **VON NGUYEN PHUNG QUANG ; JÖRG-ANDREAS DITTRICH.** Praxis der feldorientierten Drehstromantriebsregelungen. 1999, 110-113
- **VON FRANCESCO PARASILITI.** Low cost current Sensing in DSP Based Drives. *Industrial Electronics, 1999, ISIE'99, Proceedings of the IEEE,* 1999, vol. 3